# EUROPEAN PATENT APPLICATION

(11) **EP 4 819 018 A1**
(43) Date of publication of application: **07.10.2026**
(21) Application number: 26158621.8
(22) Date of filing: 13.02.2026
(51) Int. Cl.: G06Q 30/0214, G06F 16/901

(54) **INFORMATION PROCESSING DEVICE, INFORMATION PROCESSING METHOD, AND INFORMATION PROCESSING PROGRAM**

(30) Priority: 31.03.2025 JP 2025057845
(71) Applicant: Hitachi, Ltd., Tokyo 100-8280 (JP); Kyoto University, Kyoto-shi, Kyoto 606-8501 (JP)
(72) Inventor: KATO, Takeshi, Kyoto, 606-8501 (JP); HIROI, Yoshinori, Kyoto, 606-8501 (JP); MINE, Ryuji, Tokyo, 100-8280 (JP); MIYAKOSHI, Junichi, Tokyo, 100-8280 (JP); MIYAKOSHI, Misa, Tokyo, 100-8280 (JP); KUDO, Yasuyuki, Tokyo, 100-8280 (JP)
(74) Representative: Mewburn Ellis LLP

(57) **Abstract**

An information processing device includes a processor configured to execute a program; and a storage device configured to store the program, wherein the storage device stores a directed graph constituted of a plurality of nodes indicating individuals and sites visitable by the individuals, a first directed edge indicating a first relation between the individual and the site among the plurality of nodes, and a second directed edge indicating a second relation between the individuals by connection of two of the nodes indicating two of the individuals among the plurality of nodes, and wherein the processor executes: calculation process of calculating an evaluation index value for evaluating the first relation and/or the second relation on the basis of the directed graph; and an output process of outputting a calculation result obtained by the calculation process.

## Description

### Technical Field

The present invention relates to an information processing device that processes information, an information processing method, and an information processing program.

### Background Art

In regional towns, shopping districts are increasingly lined with shuttered storefronts, and a decline of city centers and reduction in real-life human relationships has been progressing. As a result, revitalization of shopping districts has become a problem to be addressed for regional economic centers and community spaces for residents.

One model for a regeneration process for shopping districts is centering shops with a high sense of urgency and drive, and through the resulting dialogue, causing an increase in shops neighboring the original shops. As a turning point is crossed, the social relationship between the shopping district and residents is synergistically nurtured, and the city center including the shopping district develops in a sustained manner. This model has been analyzed through experience of revitalizing shopping districts, with the relationship between shops and residents, interpersonal relationships of residents, and relationships between shops being an important factor, but the model so far has been limited to qualitative analysis.

The following Patent Document 1 discloses an introduction system. The introduction system comprises a member customer management unit that registers only a customer who has used an actual store as a store member; an introduction information generation unit that causes a store terminal device to display a setting screen for freely setting a type and content of an introduction establishment reward and a use privilege and generates introduction information according to the input content; a my page generation unit that generates a my page in which only introduction information issued by a member store in which an introducer is registered as a store member is displayed in a list for each store and causes an introducer terminal device to display the my page; and a store visit processing unit that executes at least a process of giving the introduction establishment reward when an introduced person presents a store visit processing code in the actual store and a store visit process is performed.

### Related Art Documents

### Patent Documents

Patent Document 1: Japanese Patent No. 7485320

### SUMMARY OF THE INVENTION

### Problems to be Solved by the Invention

An object of the referral system of Patent Document 1 is to provide perks, and thus, no consideration is given to the relationship between a referrer and a shop other than one of which the referrer is a member, the relationship between the referrer and an unspecified person, or the relationship between shops. In revitalizing shopping districts, as indicated by the regeneration model, it is necessary to collect and evaluate relationship data for the relationship between shops and customers, the relationship between customers or between referrers and referred individuals, or the relationship between shops, and at the present time, not enough relationship data has been collected.

An object of the present invention is to visualize the evaluation of activities by individuals and activities at sites visited by the individuals.

### Means for Solving the Problems

An disclosed information processing device comprises a processor configured to execute a program; and a storage device configured to store the program, wherein the storage device stores a directed graph constituted of a plurality of nodes indicating individuals and sites visitable by the individuals, a first directed edge indicating a first relation between the individual and the site among the plurality of nodes, and a second directed edge indicating a second relation between the individuals by connection of two of the nodes indicating two of the individuals among the plurality of nodes, and wherein the processor executes: calculation process of calculating an evaluation index value for evaluating the first relation and/or the second relation on the basis of the directed graph; and an output process of outputting a calculation result obtained by the calculation process.

### Effects of the Invention

According to a representative embodiment of the present invention, it is possible to visualize the evaluation of activities by individuals and activities at sites visited by the individuals. Other objects, configurations, and effects than those described above are clarified by the following description of an embodiment.

### BRIEF DESCRIPTION OF THE DRAWINGS

FIG. 1 is a block diagram showing a system configuration example of an information processing system.
FIG. 2 is a sequence view showing an example of referral process steps in the information processing system.
FIG. 3 is a descriptive view showing an operation and process example for the referrer terminal.
FIG. 4 is a descriptive view showing an example of information display (step S210) in the referred individual terminal.
FIG. 5 is a sequence view showing an example of shop visit process steps in the information processing system.
FIG. 6 is a descriptive view showing an example of the shop visit history DB.
FIG. 7 is a descriptive view showing an example of the referral history DB.
FIG. 8 is a flowchart showing an example of evaluation process steps executed by the information processing device.
FIG. 9 is a descriptive view showing an example of first relation data.
FIG. 10 is a descriptive view showing an example of second relation data.
FIG. 11 is a descriptive view showing an example of generating a directed graph (date/time ta1).
FIG. 12 is a descriptive view showing an example of generating a directed graph (date/time tb1).
FIG. 13 is a descriptive view showing an example of generating a directed graph (date/time tb2).
FIG. 14 is a descriptive view showing an example of generating a directed graph (date/time tx).
FIG. 15 is a descriptive view showing a calculation result example 1.
FIG. 16 is a descriptive view showing a calculation result example 2.
FIG. 17 is a descriptive view showing a calculation result example 3.
FIG. 18 is a descriptive view showing a calculation result example 4.
FIG. 19 is a descriptive view showing a calculation result example 5.
FIG. 20 is a descriptive view showing an example of another directed graph.
FIG. 21 is a descriptive view showing an adjacency matrix of the directed graph of FIG. 20.
FIG. 22 is a descriptive view showing a distance matrix calculated on the basis of the adjacency matrix 2100 of FIG. 21.
FIG. 23 is a descriptive view showing a calculation result example 6.
FIG. 24 is a descriptive view showing a community division example.
FIG. 25 is a descriptive view showing a calculation result example 7.
FIG. 26 is a descriptive drawing showing an output screen example 1.
FIG. 27 is a descriptive drawing showing an output screen example 2.
FIG. 28 is a descriptive drawing showing an output screen example 3.

### DETAILED DESCRIPTION OF EMBODIMENTS

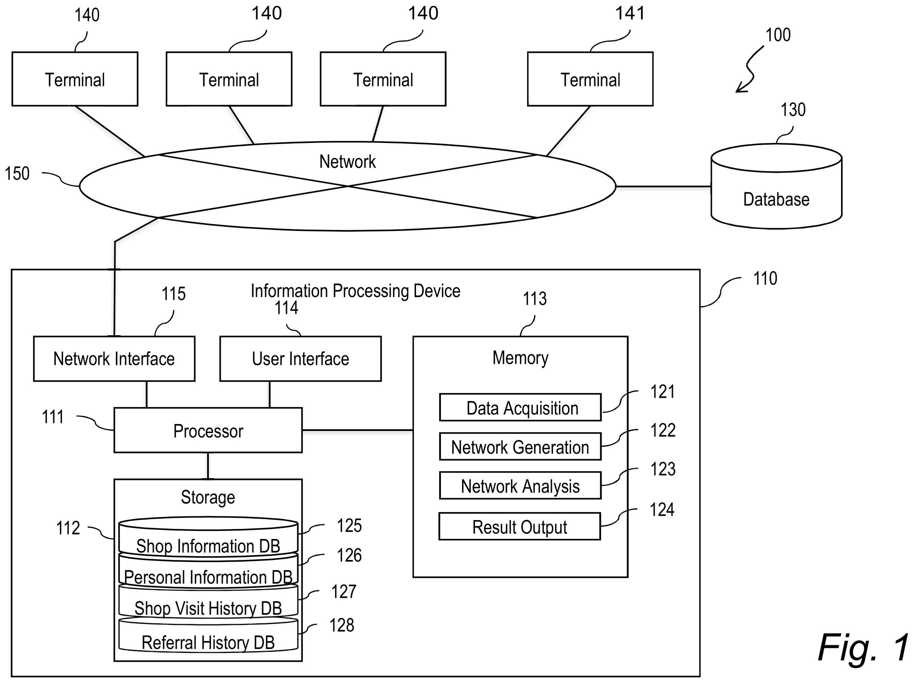

### <FIG. 1, System Configuration Example>

FIG. 1 is a block diagram showing a system configuration example of an information processing system. An information processing system 100 has an information processing device 110, a database 130, and terminals 140 and 141. The information processing device 110, the database 130, and the terminals 140 and 141 are connected in a manner enabling communication therebetween via a network 150 such as the internet, a LAN (local area network), or a WAN (wide area network).

The information processing device 110 is a computer having a processor 111, a storage 112, a memory 113, a user interface 114, and a network interface 115.

The information processing device 110 communicates with the database 130 and the terminals 140 and 141 via the network interface 115 and the network 150.

The processor 111 executes programs loaded from the storage 112 to the memory 113. Specifically, for example, the processor 111 executes a calculation process constituted of a data acquisition program 121, a network generation program 122, a network analysis program 123, and a result output program 124, and outputs the evaluation results using the result output program 124. Content and method of the calculation process will be described later.

### [Group of Programs]

The storage 112 stores a group of programs from the data acquisition program 121 to the result output program 124, for example. The data acquisition program 121 is a program that acquires data from the terminals 140 and extracts relation data. The network generation program 122 is a program that generates a directed graph as a network constituted of nodes and edges, from the relation data.

The network analysis program 123 is a program that analyzes the generated directed graph on the basis of evaluation indices. The result output program is a program that outputs calculation results from the network analysis program 123 to a display device, which is one example of the user interface 114, or transmits the calculation results in a displayable manner from the network interface 115 to the display device of the terminal 141 via the network 150.

The processing results of the group of programs are stored in the storage 112 in tabular format, for example. Also, the processing results of the group of programs are transmitted from the network interface 115 via the network 150 and stored in the database 130 in tabular format, for example.

### [Shop Information DB 125]

Also, the storage 112 stores a shop information database (DB) 125. The shop information DB 125 includes a shop identification (ID), a shop name, and location information, for example. Of the shop ID, the shop name, and the location information of the shop, at least the shop ID is referred to as the shop information of the shop. The shop information DB 125 may be stored in the database 130.

The shop ID is identification information that uniquely identifies the shop. The shop name is the name of the shop. The location information is information regarding the location of the shop, and indicates the address or position information (latitude and longitude), for example. The location information may include map data that includes the location of the shop.

In the present embodiment, shops are given as the example, but the invention is not limited to shops, and may, for example, be a facility such as a municipal or ward office, a school, a library, a park, a museum, an observatory, a tower, an amusement park, a zoo, an aquarium, or a historical building, or a natural tourist attraction such as a mountain or a waterfall. Shops, facilities, and natural tourist attractions are collectively referred to as "sites."

### [Personal Information DB 126]

Also, the storage 112 stores a personal information DB 126. The personal information DB 126 includes personal identification (ID) of an individual who owns the terminal 140, a personal name, a contact address, point information, referred shop information, visitable shop information, and referred individual information. The personal information DB 126 may be stored in the database 130.

The personal ID is identification information that uniquely identifies the individual. The personal name is the name of the individual (e.g., full name or handle). The contact address is set to the terminal 140 of the individual, and is an individual for communication with the information processing device 110 the terminal 140 of another individual, and includes, for example, an email address, a social media ID, or a messaging application account.

The point information is information regarding points awarded to each individual. The points are awarded to each individual and are a usable reward value. If, for example, an individual visits a shop, refers another individual to the shop, or an individual visits a shop to which they were referred by another individual, the points are awarded by the information processing device 110. Points can be used for preferential treatment at shopping district events, discounts on products and services, and awarding of perks. Every time points are used, that number of points is deducted from the total points. The number of points indicates the total value of the points. The point information includes a history of points being awarded, a history of points being used, and the latest number of points.

The referred shop information is information of a shop (referred shop) to which the individual was referred by another individual. The referred shop information includes, in addition to the shop information of the referred shop, the personal ID and personal name of the referrer, the personal ID and personal name of the referred individual, the date/time that the individual was referred by the referrer, and a message from the referrer.

The visitable shop information is information of a shop (visitable shop) to which the individual can visit. The visitable shop information is information of all shops registered in the shop information DB 125. Shops visited by the individual are assigned a flag in the visitable shop information indicating that the shop has been visited.

The referred individual information is personal name of another individual who can be a referred individual to which the shop can be introduced. The referred individual information can be added, changed, or deleted by an operation on the terminal 140.

### [Shop Visit History DB 127]

Also, the storage 112 stores a shop visit history DB 127. The shop visit history DB 127 is a database that stores a shop visit history indicating which shop was visited by which individual. Details regarding the shop visit history DB 127 will be described later.

### [Referral History DB 128]

Also, the storage 112 stores a referral history DB 128. The referral history DB 128 is a database that stores a referral history indicating who was referred by whom to which shop, and when the referral occurred. Details regarding the referral history DB 128 will be described later.

The storage 112, the memory 113, and the database 130 are each a non-transitory or transitory recording medium that stores various programs and data. Examples thereof include, for example, ROM (read only memory), RAM (random access memory), an SSD (solid state drive), or an HDD (hard disk drive). The storage 112 and the memory 113 are collectively referred to as "storage devices."

The user interface 114 is constituted of a display, a keyboard, a mouse, a touch panel, a speaker, a microphone, a camera, a sensor, or the like, for example, and includes at least one of the foregoing. The user interface 114 displays input data or calculation process results.

The network interface 115 is connected to the network 150 that is the internet or a communication line, and transmits/receives various data between the database 130 and the terminals 140.

### [Terminals 140, 141]

The terminals 140 and 141 have a similar configuration to the information processing device 110 and are, for example, smartphones, or may be tablet- or laptop-type personal computers, client terminals, or the like. Also, the terminals 140 and 141 may be configured to have a GPS receiver and calculate the position information of the terminals 140 using data received by the GPS receiver from a GPS satellite.

Additionally, the terminals 140 and 141 may have installed therein a camera and a recognition program for a two-dimensional code such as a QR code (registered trademark). The camera captures the two-dimensional code. The terminals 140 and 141 use the recognition program for the two-dimensional code to analyze the two-dimensional code captured by the camera (image processing and decoding), and acquire data embedded in the two-dimensional code.

The terminal 140 has installed therein a referral application. The referral application is application software that manages visits to a shop and referrals to the shop. The terminal 140 uses the referral application to acquire data indicating that an individual has visited a shop, data indicating that the individual who visited the shop has referred another person to the shop, or data indicating that the individual referred to the shop (referred individual) has visited the shop. The acquired data is collectively referred to as relation data. The terminal 140 uses the referral application to transmit the relation data to the information processing device 110 via the network 150.

In this case, the information processing device 110 acquires the relation data using the data acquisition program 121, calculates evaluation results using the network generation program 122, the network analysis program 123, and the result output program 124, and outputs the evaluation results using the result output program 124.

The terminal 141 transmits/receives data to/from the information processing device 110 via the network 150 to operate the information processing device 110. An analyzer, for example, uses the terminal 141 to operate the information processing device 110.

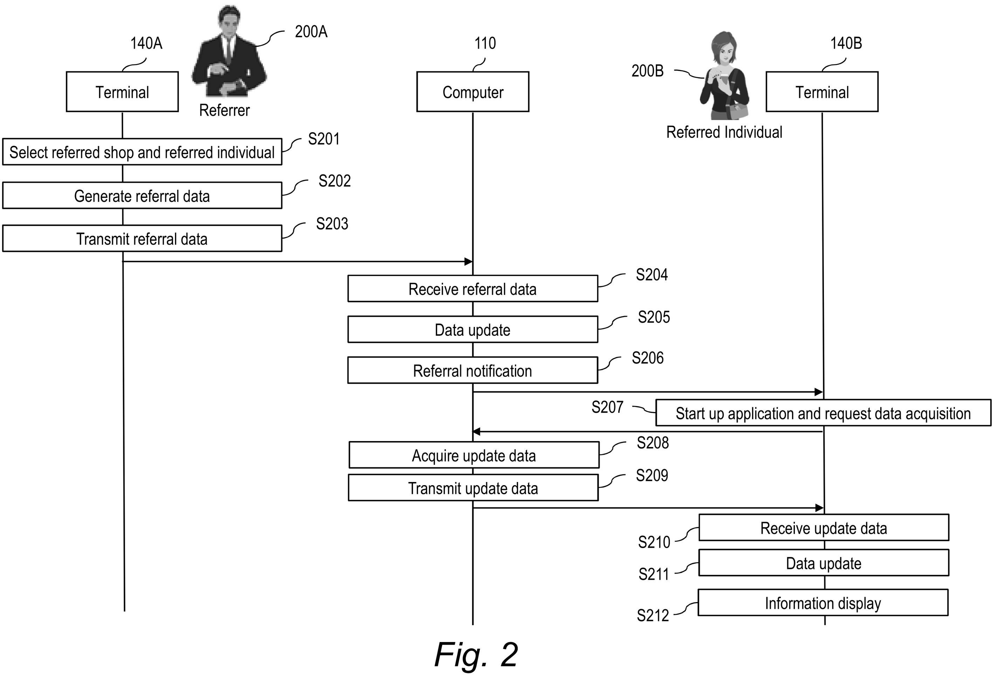

### <FIG. 2, Referral Process>

FIG. 2 is a sequence view showing an example of referral process steps in the information processing system 100. In FIG. 2, the terminal 140 of an individual who is a referrer 200A is designated as a referrer terminal 140A, and the terminal 140 of an individual who is a referred individual 200B is designated as a referred individual terminal 140B. If not distinguishing between the referrer 200A and the referrer terminal 140A, the foregoing are collectively referred to as the "individual." Also, if not distinguishing between the referrer terminal 140A and the referred individual terminal 140B, the foregoing are collectively referred to as the terminals 140.

### (Steps S201 to S203)

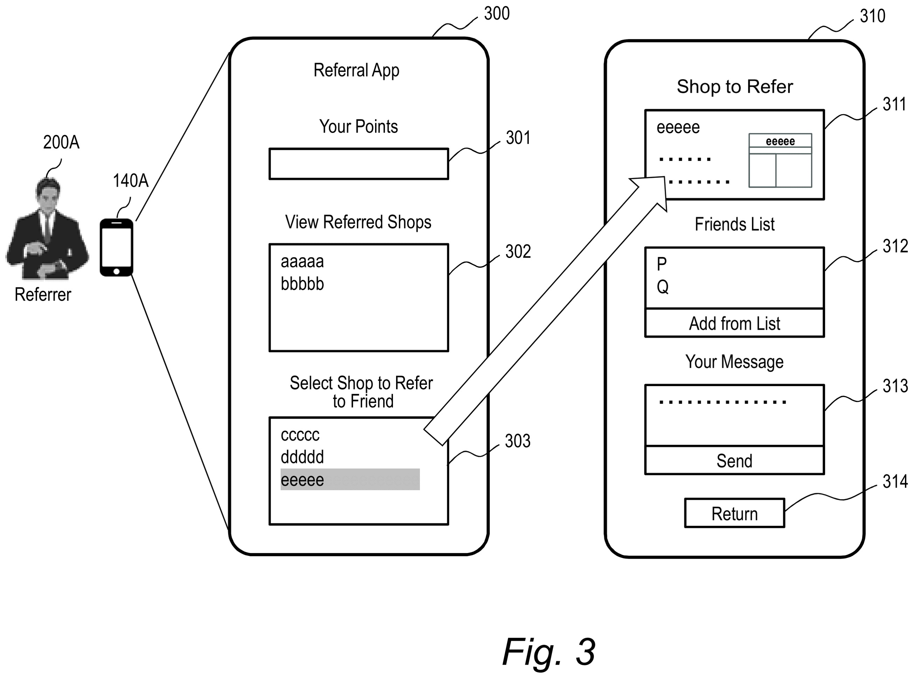

The referrer terminal 140A executes selection of a referred shop and a referred individual (step S201), referral data generation (step S202), and referral data transmission (step S203). Steps S201 to S203 will be described with reference to FIG. 3.

### [FIG. 3, Operation and Process Example for Referrer Terminal 140A]

FIG. 3 is a descriptive view showing an operation and process example for the referrer terminal 140A. When the terminal 140 starts up the referral application, a main screen 300 is displayed in the terminal 140. As an example, in FIG. 3, the main screen 300 is displayed in the referrer terminal 140A. The main screen 300 has a points display section 301, a referred shop selection section 302, and a referral shop display section 303.

The points display section 301 displays the latest number of points awarded to the individual by the information processing device 110.

The referred shop selection section 302 displays a list of names of shops (referred shops) to which the individual has been referred by other people, and is a user interface that receives selection of a name of a referred shop from the list.

The referral shop display section 303 displays a list of names of shops (referral shops) to which the individual can refer other people, and is a user interface that receives selection of a name of a referral shop from the list. The example of FIG. 3 shows a state in which the shop name "eeeee" is selected.

Specifically, for example, upon starting up the referral application, the terminal 140 transmits a data acquisition request to the information processing device 110 to request data from the information processing device 110. Upon receiving the data acquisition request, the information processing device 110 acquires the latest visitable shop information from the shop information DB 125, and acquires the latest number of points, the latest referred shop information, and the latest referred individual information from the personal information DB 126. The information processing device 110 transmits the update data acquired in this manner to the terminal 140 of the individual.

By this update data, the terminal 140 updates the number of points stored in the storage device with the latest number of points included in the update data, adds the latest referred shop information included in the update data to the referred shop information stored in the storage device, and updates the visitable shop information stored in the storage device with the latest visitable shop information included in the update data.

As a result, the latest number of points is displayed in the points display section 301 of the main screen 300 of the terminal 140. Also, the list of shop names from the latest referred shop information is displayed in the referred shop selection section 302. The terminal 140 may exclude, from the list, referred shop information for which a shop-visited flag is set. Also, the list of shop names from the latest visitable shop information is displayed in the referral shop display section 303. The terminal 140 may display, at the top of the list, shop information for which a shop-visited flag is set.

In step S201, upon receiving selection of the shop name displayed in the referral shop display section 303 by an operation by the referrer 200A, the referrer terminal 140A switches from the main screen 300 to a referral screen 310.

The referral screen 310 has a referral shop information display section 311, a referred individual list selection display section 312, a to-send message input section 313, and a send button 314.

The referral shop information display section 311 displays the referral shop information. The referral shop information is information of a shop selected in the referral shop display section 303 of the main screen 300. Among the shop ID, the shop name, and the location information, the displayed information includes at least the shop name and the location information. Also, the referrer terminal 140A may coordinate with a map server that provides map information to display a surrounding map of the location information. The example of FIG. 3 shows a state in which the referral shop information of the selected shop name "eeeee" is displayed in step S201.

The referred individual list selection display section 312 is a user interface that displays a list of referred individuals and receives selection of the referred individual to whom the shop is to be referred in the current round. FIG. 3 shows a state in step S201 in which "P" and "Q" are selected as the referred individuals. The referred individual "P" is the referred individual 200B of FIG. 2.

The to-send message input section 313 is a user interface that receives input of a given character string through operation by an operator, and displays the character string.

The send button 314 is a user interface that accepts data transmission to the information processing device 110 through operation by an operator.

In step S202, when the send button 314 is detected as being pressed, the referrer terminal 140A generates referral data. The referral data includes, for example, the date/time (referral date/time) that pressing of the send button 314 was detected, the shop ID of the referral shop information with the shop name "eeeee" displayed in the referral shop information display section 311, the personal ID of the referrer 200A, the personal IDs of the referred individuals "P" and "Q" selected in the referred individual list selection display section 312, and a message that is a character string inputted to the to-send message input section 313.

In step S203, the referrer terminal 140A transmits the referral data generated in step S202 to the information processing device 110.

### (Step S204)

In FIG. 2, the information processing device 110 receives the referral data transmitted from the referrer terminal 140A in step S203.

### (Step S205)

The information processing device 110 executes a data update on the basis of the referral data received in step S204. The data update includes updating of the personal information DB 126 and updating of the referral history DB 128.

Regarding updating the personal information DB 126, specifically, for example, the information processing device 110 identifies the personal ID of the referrer 200A included in the referral data and the personal IDs of the referred individuals "P" (200B) and "Q."

In the point information of the referrer 200A, the information processing device 110 adds a prescribed number of points based on referral of the shop to the latest number of points. Also, the information processing device 110 identifies the personal IDs of the referred individuals "P" (200B) and "Q" included in the referral data. In the respective pieces of point information of the referrer "P" (200B) and "Q," the information processing device 110 adds a prescribed number of points based on referral to the shop to the latest number of points.

Also, the information processing device 110 adds, to the respective pieces of referred shop information of the referred individuals "P" (200B) and "Q," the personal ID of the referrer 200A, the shop information of the shop referred to by the referrer 200A, the referral date/time, and the message.

Regarding updating the referral history DB 128, specifically, for example, the information processing device 110 adds the referral date/time included in the referral data, the shop ID of the referred shop that was referred to by the referrer 200A, the personal ID of the referrer 200A, and the personal IDs of the referred individuals "P" (200B) and "Q."

### (Step S206)

The information processing device 110 acquires from the personal information DB 126 the contact addresses of the referred individuals "P" (200B) and "Q" included in the referral data. The information processing device 110 sets the acquired contact addresses as destination addresses and transmits a referral notification to the terminals 140 of the referred individuals "P" (200B) and "Q." The referral notification is a notification informing the referred individuals "P" (200B) and "Q" of referral of a shop by a referrer.

### (Step S207)

The referred individual 200B operates the referred individual terminal 140B in response to the referral notification and starts up the referral application, for example. Upon startup of the referral application by operation of the referred individual 200B, the referred individual terminal 140B transmits a data acquisition request using the referral application to the information processing device 110.

### (Step S208)

Upon receiving the data acquisition request of step S207, the information processing device 110 executes acquisition of the update data. Specifically, for example, similar to the case described with reference to FIG. 3, the information processing device 110 acquires the latest visitable shop information from the shop information DB 125, and acquires the latest number of points, the latest referred shop information, and the latest referred individual information of the referred individual 200B from the personal information DB 126.

### (Step S209)

The information processing device 110 transmits the data acquired in step S208 as the update data to the referred individual terminal 140B of the referred individual 200B.

### (Step S210)

The referred individual terminal 140B receives the update data transmitted in step S209.

### (Step S211)

Upon receiving the update data transmitted in step S210, the referred individual terminal 140B executes a data update. Specifically, for example, the referred individual terminal 140B updates the number of points stored in the storage device with the latest number of points included in the update data. Also, the referred individual terminal 140B adds the latest referred shop information to the referred shop information stored in the storage device. Additionally, the referred individual terminal 140B updates the visitable shop information stored in the storage device with the latest visitable shop information included in the update data.

### (Step S212)

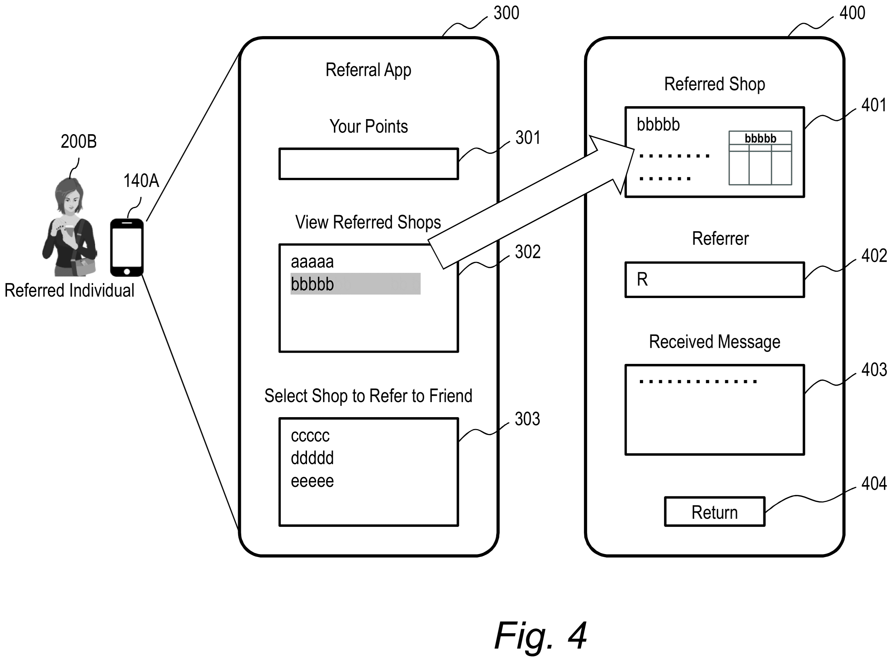

The referred individual terminal 140B executes information display. The information display will be specifically described with reference to FIG. 4.

### <FIG. 4, Information Display in Referred Individual Terminal 140B (step S210)>

FIG. 4 is a descriptive view showing an example of information display (step S210) in the referred individual terminal 140B. In FIG. 4, for example, the latest number of points updated in step S210 is displayed in the points display section 301 of the main screen 300 of the referred individual terminal 140B, the shop name of the latest referred shop information updated in step S210 is displayed in the referred shop selection section 302, and the shop name of the latest visitable shop information updated in step S210 is displayed in the referral shop display section 303.

FIG. 4 shows a state in which a shop name "bbbbb" of the referred shop is selected in the referred shop selection section 302 due to an operation by the referred individual 200B, for example.

When the shop name "bbbbb" of the referred shop is selected, the referred individual terminal 140B displays a referral reception screen 400. The referral reception screen 400 has a referred shop information display section 401, a referrer information display section 402, a received message display section 403, and a back button 404.

The referred shop information display section 401 displays the referred shop information. In the example of FIG. 4, the referred shop information is information of a shop name "bbbbb" of the referred shop selected in the referred shop selection section 302 of the main screen 300.

The referrer information display section 402 displays the referrer information. The referrer information displayed in the referrer information display section 402 is the personal name of the referrer 200A, for example.

The received message display section 403 displays the received message. The received message is a message by the referrer 200A included in the latest referred shop information received in step S210, or in other words, the message inputted to the to-send message input section 313.

The back button 404 is a user interface for returning to the main screen 300 when operation of the back button by the referred individual 200B is detected.

The referred individual terminal 140B displays the referral reception screen 400, thereby prompting the referred individual 200B to move to the referred shop "bbbbb."

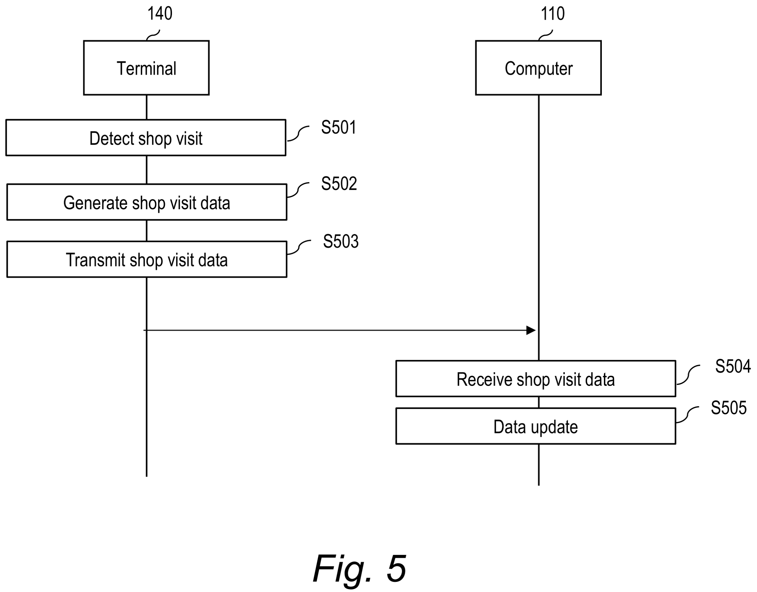

### <FIG. 5, Shop Visit Process>

FIG. 5 is a sequence view showing an example of shop visit process steps in the information processing system 100. The shop visit process is an information process executed between the terminal 140 and the information processing device 110.

### (Step S501)

The referred individual terminal 140B detects the visiting of a shop. The shop for which the visit is to be detected need not necessarily be the referred shop. The shop visit detection method includes shop visit detection D1 using position information, shop visit detection D2 by acquisition of shop information of the visited shop, and shop visit detection D3 by transaction at the visited shop, for example. When a shop visit is detected, the referred individual terminal 140B sets information indicating that the shop has been visited in the visitable shop information in the storage device. The information indicating that the shop has been visited may also include information indicating the executed shop visit detection method (any of the shop visit detection methods D1 to D3).

### [Shop Visit Detection D1 using Position Information]

The terminal 140 is set to a state of being able to acquire current position information. The referred individual terminal 140b determines, using the referral application whether the current position information matches the position information of the shop or the difference therebetween is within a prescribed allowable range. If the current position information matches the position information of the shop or the difference therebetween is within a prescribed allowable range, the terminal 140 uses the referral application to detect that the individual has visited the shop.

As a result, the terminal 140 can automatically detect that the individual has visited the shop without the individual operating the terminal 140. Thus, even if the individual did not recognize that the shop that the individual has visited is the shop in the visitable shop information, the terminal 140 detects the shop visit, which improves the convenience of shop visit detection.

### [Shop Detection D2 by Acquisition of Shop Information in Visited Shop]

In this scenario, the shop displays a two-dimensional code that encodes therein the shop information of the shop. The individual visits the shop and captures an image of the two-dimensional code displayed in the shop using the camera of the terminal 140. The terminal 140 analyzes the two-dimensional code (image processing and decoding), and acquires shop information of the shop embedded in the two-dimensional code.

The terminal 140 uses the referral application to determine whether the acquired shop information of the shop matches the visitable shop information stored in the storage device. If it is determined that the acquired shop information matches the visitable shop information, the terminal 140 uses the referral application to detect that the individual has visited the shop. As a result, the shop visit is detected as a result of the individual actually visiting the shop.

### [Shop Detection D3 by Transaction in Visited Shop]

In this scenario, the terminal 140 has installed therein a transaction application that performs a transaction if a product is purchased or a service is provided at a shop registered in the shop information DB 125, the transaction application being able to acquire the shop information of the shop.

The individual visits the shop, purchases a product or receives a service at the shop, uses the transaction application in the terminal 140 to complete the transaction, and acquires the shop information of the shop. The acquired shop information of the shop includes at least one of the shop ID of the shop, the shop name, and the location information of the shop.

The terminal 140 uses the referral application to determine whether the acquired shop information of the shop matches the visitable shop information stored in the storage device. If it is determined that the acquired shop information matches the visitable shop information, the referred individual terminal 140B uses the referral application to detect that the individual has visited the shop.

As a result, the terminal 140 can detect that the individual has visited the shop when the transaction was completed, and thus, even if the individual did not recognize that the shop that the individual has visited is the shop in the visitable shop information, the terminal 140 can detect the shop visit. Also, the terminal 140 does not need to acquire the current position information, and thus, it is possible to reduce power consumption of the terminal 140 compared to the shop visit detection D1 in which the position information is used.

### (Step S502)

The referred individual terminal 140B generates shop visit data pertaining to the visited shop for which the shop visit was detected in step S501. The shop visit data includes a shop visit date/time, a shop ID of the visited shop (visited shop ID), and the personal ID of the individual who visited the shop. The shop visit date/time is the date/time that the shop visit was detected in step S501. The shop visit data may include information indicating the executed shop visit detection method (any of D1 to D3).

### (Step S503)

The referred individual terminal 140B transmits the shop visit data generated in step S502 to the information processing device 110.

### (Step S504)

The information processing device 110 receives the shop visit data transmitted in step S503.

### (Step S505)

The information processing device 110 executes a data update on the basis of the shop visit data received in step S504. Specifically, for example, the information processing device 110 adds the shop visit data to the shop visit history DB 127. Also, the information processing device 110 adds the points awarded as a result of the individual visiting the shop to the number of points that the individual has in the personal information DB 126, thereby updating the number of points that the individual has. Also, the information processing device 110 may add the points awarded as a result of the individual visiting the shop to the number of points that the individual has according to the information indicating the shop visit detection method.

Also, the information processing device 110 determines whether the visited shop that was visited by the individual is a referred shop that was referred to by another person with reference to the referral history DB 128. If the visited shop is the referred shop, the information processing device 110 records, in the referral history DB 128, information indicating that the individual (referred individual 200B) has visited the referred shop. Also, in this case, the information processing device 110 may add the points awarded as a result of the referred individual 200B visiting the shop to the number of points that the referrer 200A has, to update the number of points that the referred individual 200B has.

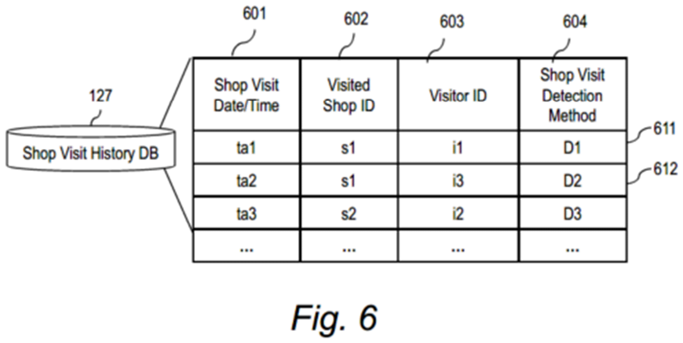

### <FIG. 6, Shop Visit History DB 127>

FIG. 6 is a descriptive view showing an example of the shop visit history DB 127. The shop visit history DB 127 has, as fields, a shop visit date/time 601, a visited shop ID 602, a customer ID 603, and a shop visit detection method 604. The value of the shop visit date/time 601 is the shop visit date/time included in the shop visit data. The value of the visited shop ID 602 is the visited shop ID included in the shop visit data. The value of the customer ID 603 is the personal ID included in the shop visit data. The value of the shop visit detection method 604 is information indicating the executed shop visit detection method included in the shop visit data (any of D1 to D3).

In the description of the databases or tables below, the value of AA bbb (AA being the field name and bbb being a reference character) is sometimes expressed as AA bbb. For example, the value ta1 of the shop visit date/time 601 is sometimes written as "shop visit date/time ta1."

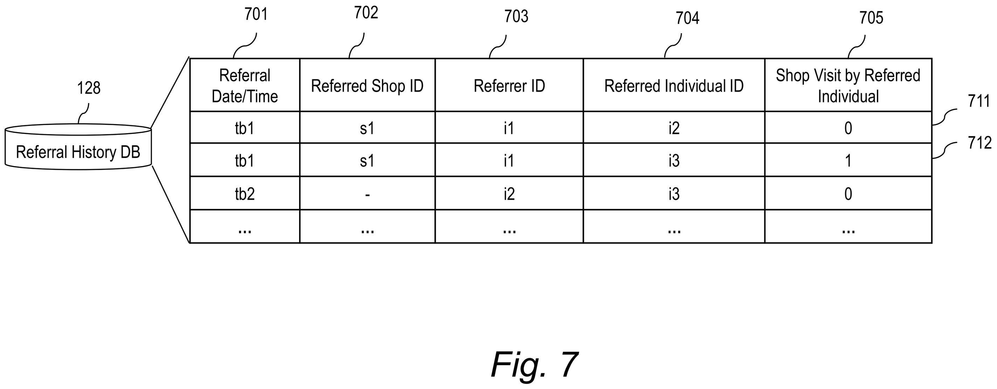

### <FIG. 7, Referral History DB 128>

FIG. 7 is a descriptive view showing an example of the referral history DB 128. The referral history DB 128 has, as fields, a referral date/time 701, a referral shop ID 702, referrer ID 703, a referred individual ID 704, and a shop visit 705 by the referred individual.

The value of the referral date/time 701 is the date/time (referral date/time) included in the referral data received in step S204. The value of the referral shop ID 702 is the shop ID included in the referral data received in step S204. The value of the referrer ID 703 is the personal ID of the referrer 200A included in the referral data received in step S204. The value of the referred individual ID 704 is the personal ID of the referred individual 200B included in the referral data received in step S204.

The value of the shop visit 705 of the referred individual indicates whether the individual with the referred individual ID 704 (referred individual 200B) has visited the shop with the referral shop ID 702 referred to by the individual with the referrer ID 703 (referrer 200A). If the individual has not visited the shop, then the value is "0," and if the individual has visited the shop, then the value is "1." The default value is "0" indicating that the individual has not visited the shop.

The information processing device 110 refers to the referral history DB 128 and the shop visit history DB 127 to set the value of the shop visit 705 by the referred individual. Specifically, for example, the information processing device 110 identifies, from among the referral history DB 128, an entry in which the combination of values of the visited shop ID 602 and the customer ID 603 match the combination of values of the referral shop ID 702 and the referred individual ID 704. If the entry is identified, the information processing device 110 updates the value of the shop visit 705 by the referred individual in the entry from "0" to "1."

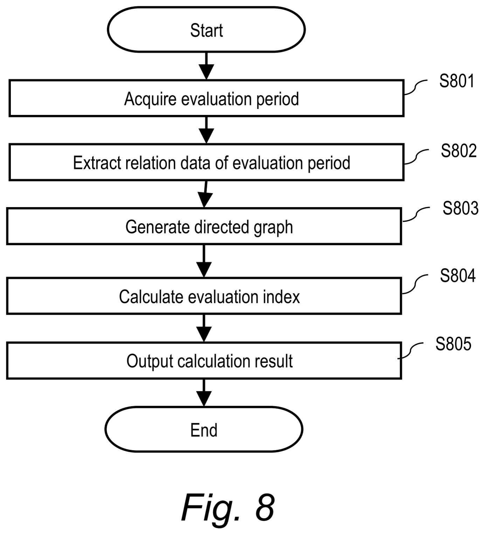

### <FIG. 8, Evaluation Process>

FIG. 8 is a flowchart showing an example of evaluation process steps executed by the information processing device 110.

### (Step S801)

The information processing device 110 uses the data acquisition program 121 to acquire an evaluation period set through the user interface 114. Specifically, for example, the information processing device 110 acquires the evaluation period by receiving input of the evaluation period by operation of an input device, which is one example of the user interface 114. Also, the information processing device 110 receives the evaluation period via the network interface 115 by an operation on the terminal 140, thereby acquiring the evaluation period. In step S801, the information processing device 110 may acquire the shop ID of a shop or personal ID of an individual, to be evaluated, through operation of the input device.

### (Step S802)

The information processing device 110 uses the data acquisition program 121 to extract, from the shop visit history DB 127 and the referral history DB 128, relation data within the evaluation period acquired in step S801. In step S801, if the shop ID of the shop or personal ID of an individual to be evaluated are acquired, the relation data is limited to what is being evaluated. Here, the relation data will be explained.

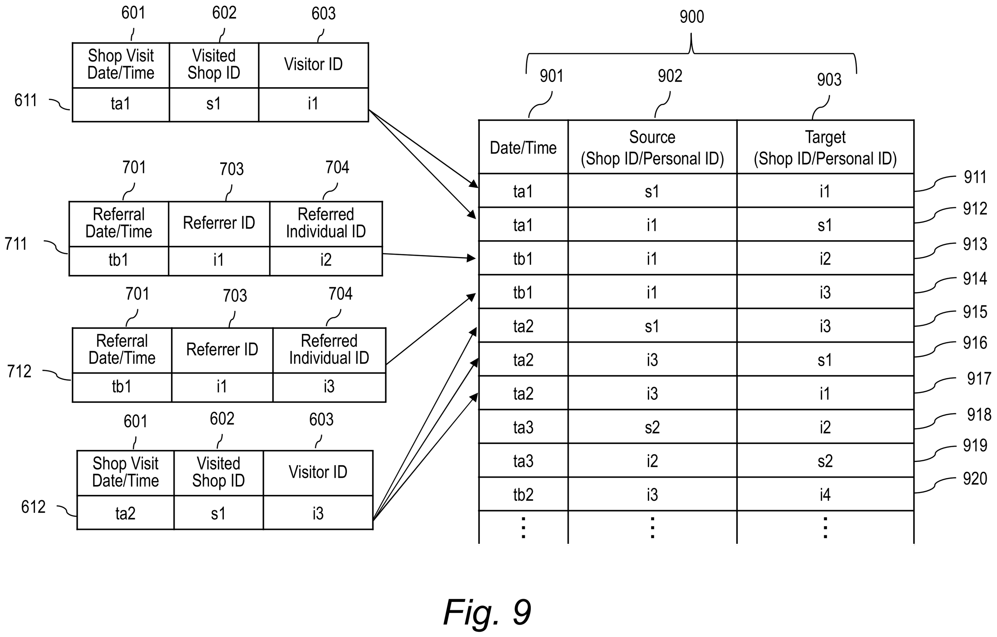

### [FIG. 9, First Relation Data]

FIG. 9 is a descriptive view showing an example of first relation data. First relation data 900 is data indicating the relations between shops and individuals and the relations between individuals. The first relation data 900 has, as fields, a date/time 901, a source 902, and a target 903. The value of the date/time 901 is the value of the shop visit date/time 601 or the value of the referral date/time 701 during the evaluation period, which were acquired in step S801. The value of the source 902 is a node to which the start point of an edge in a directed graph is connected. The value of the source 902 is the value of the visited shop ID 602 or the personal ID (customer ID 603, referrer ID 703, or referred individual ID 704). The value of the target 903 is a node to which the end point of an edge in a directed graph is connected.

If the information processing device 110 extracts the combination of values of the shop visit date/time 601, the visited shop ID 602, and the customer ID 603 from the shop visit history DB 127, then the information processing device 110 sets this combination of values as the combination of values of the date/time 901, the source 902, and the target 903, and sets the combination of values as the combination of values of the date/time 901, the target 903, and the source 902.

For example, if the entry 611 (shop visit date/time 601: ta1, visited shop ID 602: s1, customer ID 603: i1) of the shop visit history DB 127 shown in FIG. 6 is extracted, then in the first relation data 900, the entry 911 (date/time 901: ta1, source 902: s1, target 903: i1) is set, and the entry 912 (date/time 901: ta1, source 902: i1, target 903: s1) is set.

Also, if the information processing device 110 extracts the combination of values of the referral date/time 701, the referrer ID 703, and the referred individual ID 704 from the referral history DB 128, then the information processing device 110 sets this combination of values as the combination of values of the date/time 901, the source 902, and the target 903.

For example, if the entry 711 (referral date/time 701: tb1, referrer ID 703: i1, referred individual ID 704: i2) of the referral history DB 128 shown in FIG. 7 is extracted, then in the first relation data 900, the entry 913 (date/time 901: tb1, source 902: i1, target 903: i2) is set.

Similarly, if the entry 712 (referral date/time 701: tb1, referrer ID 703: i1, referred individual ID 704: i3) of the referral history DB 128 shown in FIG. 7 is extracted, then in the first relation data 900, the entry 914 (date/time 901: tb1, source 902: i1, target 903: i3) is set.

Also, if the entry 612 (shop visit date/time 601: ta2, visited shop ID 602: s1, customer ID 603: i3) of the shop visit history DB 127 shown in FIG. 6 is extracted, then in the first relation data 900, the entry 915 (date/time 901: ta2, source 902: s1, target 903: i3) is set, and the entry 916 (date/time 901: ta2, source 902: i3, target 903: s1) is set.

The shop s1 that the individual i3 visited is the shop referred to by the individual i1 at the referral date/time tb1 (entry 712), and thus, through visiting the shop, the entry 917 (date/time 901: ta2, source 902: i3, target 903: i1) is set in the first relation data 900. The entry 917 is generated as a result of the individual i3 who is the referred individual visiting the shop s1 referred to by the individual i1 who is the referrer, to indicate that the individual i3 followed through on the referral by the individual i1.

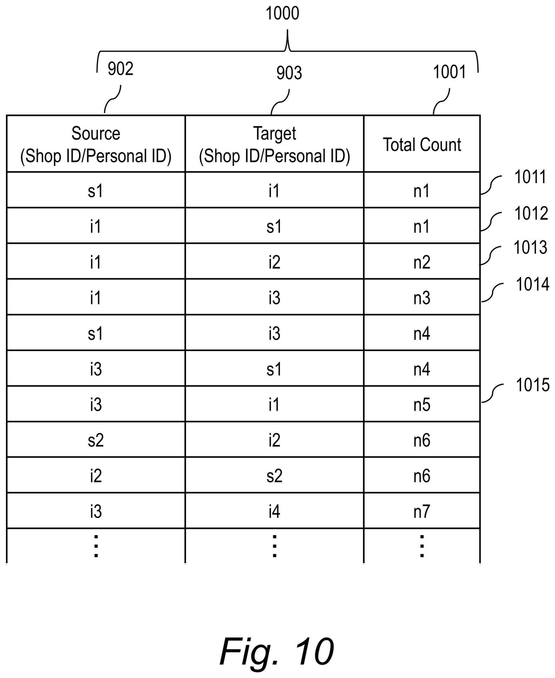

### [FIG. 10, Second Relation Data]

FIG. 10 is a descriptive view showing an example of second relation data. The second relation data 1000 is data indicating the relationship between the source 902 and the target 903. The second relation data 1000 has, as fields, the source 902, the target 903, and a total count 1001. The value of the total count 1001 is the value resulting from totaling the number of entries that are the combination of the values of the source 902 and the target 903.

That is, the total count 1001 indicates the number of shop visits, the number of referrals, or the number of referred individuals. If, for example, the value of the source 902 is the visited shop ID 602, then the value of the total count 1001 is the number of shop visits. For example, the entry 1011 indicates that the shop s1 was visited n1 times by the individual i1.

If the value of the source 902 is the referrer ID 703 and the value of the target 903 is the visited shop ID 602, then the value of the total count 1001 is the number of shop visits. For example, the entry 1012 indicates that the individual i1 visited the shop s1 n1 times.

If the value of the source 902 is the referrer ID 703 and the value of the target 903 is the referred individual ID 704, then the value of the total count 1001 is the number of referrals. For example, the entry 1013 indicates that the individual i1 has referred the individual i2 to a shop n2 times (i.e., n2 types of shops), and the entry 1014 indicates that the individual i1 has referred the individual i3 to a shop n3 times (i.e., n3 types of shops).

If the value of the source 902 is the referred individual ID 704 and the value of the target 903 is the referrer ID 703, then the value of the total count 1001 is the number of shop visits by the referred individual. For example, the entry 1015 indicates that the individual i3 visited the shop n5 times (regardless of whether the same shop or different shops) in response to the referral from the individual i1.

If the combination of the source 902 and the target 903 are individuals, then there are cases in which both individuals refer each other to shops, and thus, the total count 1001 is the total of the number of referrals and the number of shop visits by the referred individuals due to the referrals.

### (Step S803)

Returning to FIG. 8, the information processing device 110 executes a generation process of generating a directed graph using the network generation program 122. Specifically, for example, the information processing device 110 uses the network generation program 122 to generate a directed edge between the source 902 and the target 903 with the source 902 and the target 903 being nodes, with reference to the first relation data 900, thereby generating a directed graph and storing the same in the storage device. Specifically, for example, the information processing device 110 generates the nodes and the directed edges in order from the oldest date/time 901, thereby generating the directed graph. Regarding the date/time 901 in the first relation data 900, the date/time ta1 of the topmost entry 911 is the oldest, with lower dates/times being more recent.

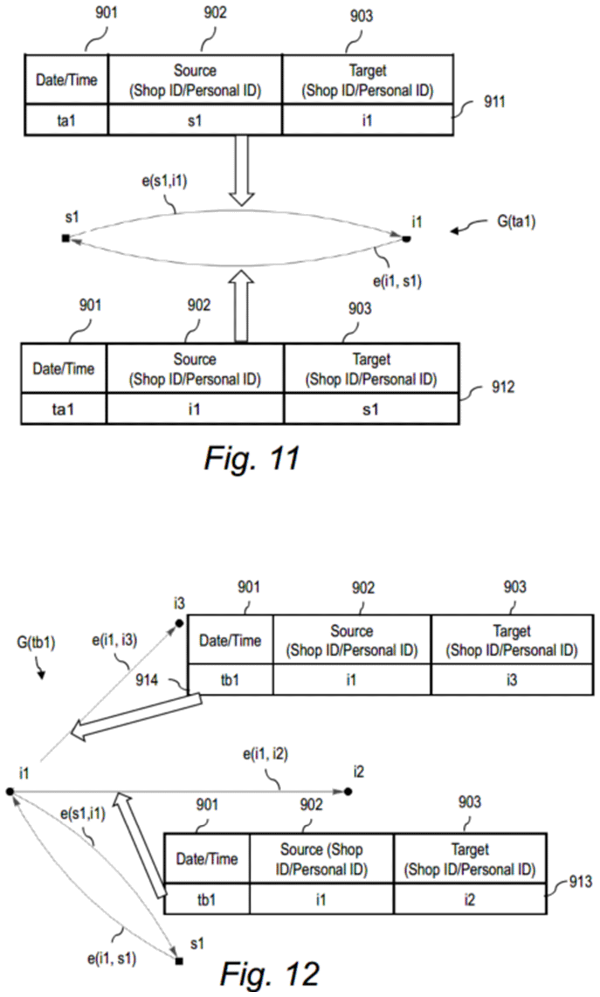

### [FIG. 11, Directed Graph Generation Example (Date/Time ta1)]

FIG. 11 is a descriptive view showing an example of generating a directed graph (date/time ta1). The information processing device 110 uses the entry 911 to generate a directed edge e(s1,i1) that connects the source s1 to the target i1. The directed edge e(x,y) (x being the source 902, y being the target 903) is a directed edge with the source x as the start point and the target y as the end point. Similarly, the information processing device 110 uses the entry 912 to generate a directed edge e(i1,s1) that connects the source i1 to the target s1.

At the date/time ta1, the nodes s1 and i1 and the directed edges e(s1,i1) and e(i1,s1) constitute the directed graph G(ta1).

### [FIG. 12, Directed Graph Generation Example (Date/Time tb1)]

FIG. 12 is a descriptive view showing an example of generating a directed graph (date/time tb1). The date/time tb1 is more recent than the date/time ta1. The information processing device 110 uses the entry 913 to generate a directed edge e(i1,i2) that connects the source i1 to the target i2. Similarly, the information processing device 110 uses the entry 914 to generate a directed edge e(i1,i3) that connects the source i1 to the target i3.

At the date/time tb1, the nodes s1 and i1 to i3 and the directed edges e(s1,i1), e(i1,s1), e(i1,i2), and e(i1,i3) constitute the directed graph G(tb1).

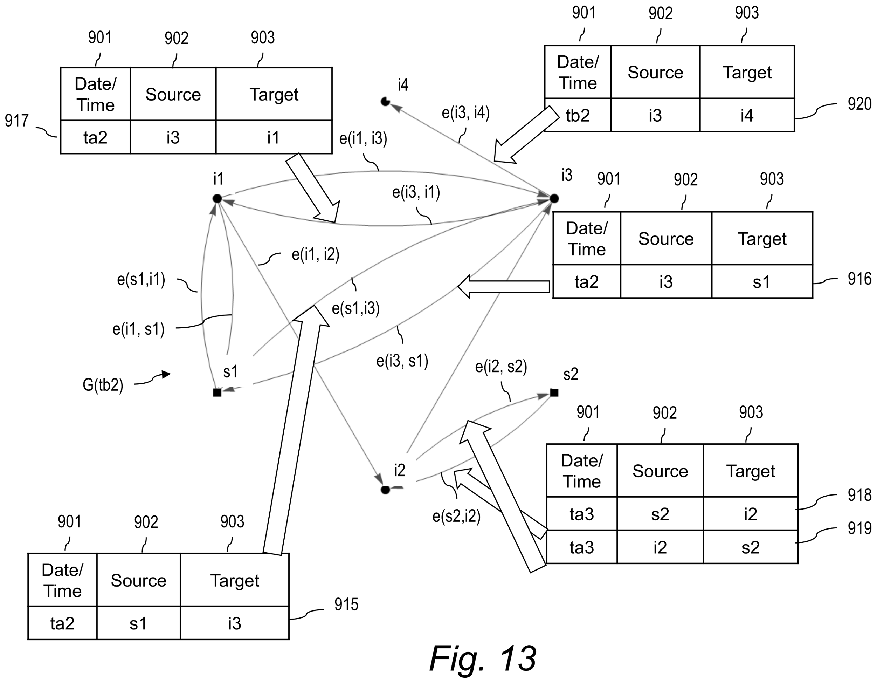

### [FIG. 13, Directed Graph Generation Example (Date/Time tb2)]

FIG. 13 is a descriptive view showing an example of generating a directed graph (date/time tb2). The date/time tb2 is more recent than the dates/times ta1 to ta3. The information processing device 110 uses the entry 915 to generate a directed edge e(s1,i3) that connects the source s1 to the target i3. The information processing device 110 uses the entry 916 to generate a directed edge e(i3,s1) that connects the source i3 to the target s1. The information processing device 110 uses the entry 917 to generate a directed edge e(i3,i1) that connects the source i3 to the target i1. The information processing device 110 uses the entry 918 to generate a directed edge e(s2,i2) that connects the source s2 to the target i2. The information processing device 110 uses the entry 919 to generate a directed edge e(i2,i2) that connects the source i2 to the target i2. The information processing device 110 uses the entry 920 to generate a directed edge e(i3,i4) that connects the source i3 to the target i4.

By using the entries 911 to 917 up to the date/time ta2, the nodes s1 and i1 to i3 and the directed edges e(s1,i1), e(i1,s1), e(i1,i2), e(i1,i3), e(s1,i3), and e(i3,s1) constitute the directed graph G(ta2).

By using the entries 911 to 919 up to the date/time ta3, the nodes s1 and i1 to i3 and the directed edges e(s1,i1), e(i1,s1), e(i1,i2), e(i1,i3), e(s1,i3), e(i3,s1), e(s2,i2), and e(i2,i2) constitute the directed graph G(ta3).

By using the entries 911 to 920 up to the date/time tb2, the nodes s1, s2 and i1 to i4 and the directed edges e(s1,i1), e(i1,s1), e(i1,i2), e(i1,i3), e(s1,i3), e(i3,s1), e(i3,i1), e(s2,i2), e(i2,i2), and e(i3,i4) constitute the directed graph G(tb2).

As a result, the directed edges e(x,y) include bidirectional directed edges between the individual and the shop that indicate that the individual has visited the shop, directed edges that indicate that an individual (referrer) has referred the shop to another individual (referred individual), and directed edges from the referred individual to the referrer indicating the referral if the referred individual has visited the shop referred to by the referrer.

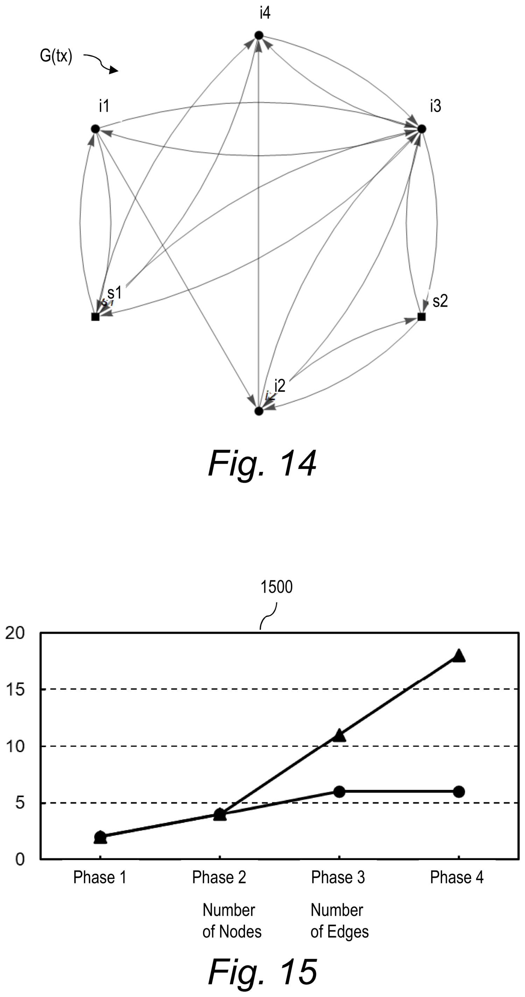

### [FIG. 14, Directed Graph Generation Example (Date/Time tx)]

FIG. 14 is a descriptive view showing an example of generating a directed graph (date/time tx). The date/time tx is the latest date/time among the dates/times 901. The information processing device 110 repeatedly executes the processes shown in FIGs. 11 to 13 up to the entry of the date/time tx of the first relation data 900, thereby generating a directed graph G(tx). If not distinguishing between the above-mentioned directed graphs G(ta1), G(tb1), G(ta2), G(ta3), G(tb2), and G(tx), the foregoing are collectively referred to as the directed graph G.

### (Step S804)

Returning to FIG. 8, the information processing device 110 executes a calculation process of calculating evaluation index values using the network analysis program 123. The evaluation index value is a value for evaluating the network structure of the directed graph G. The evaluation indices include a first evaluation index for evaluating the entire configuration of the directed graph G and a second evaluation index for evaluating nodes in the directed graph G.

The first evaluation index includes the number of nodes of the directed graph G, the number of directed edges, the graph diameter (or radius), the graph distance, the graph density, the link efficiency, the reciprocity, the homophily, and the cluster coefficient.

The number of nodes is proportional to the number of individuals who are referrers and referred individuals, and the number of shop visits and number of referred shops. The number of directed edges is proportional to the number of shop visits and the number of referrals.

The graph diameter is the longest distance in the directed graph G among distances (eccentricities) from each node to the farthest node distance that can be reached via directed edges. The graph radius is the shortest distance among the eccentricities. A large graph diameter and graph radius is indicative of a chain of referrals in which the referred individual becomes the referrer and refers another person to the shop, and additionally, the other person becomes a referrer and refers yet another person to the shop.

The graph density is an index value indicating the quantity of directed edges are present in the directed graph G. Specifically, for example, the graph density indicates the proportion of directed edges in the directed graph G in relation to the number of directed edges in which all nodes are connected by all directed edges in the directed graph G. The greater the graph density is, the more complete the graph is. That is, the graph density indicates the number of referrals by an individual to another person and the number of shop visits by the individual.

The link efficiency is proportional to the sum of the inverses of the eccentricities, and is an index value for evaluating the ease of referral of a shop by an individual to another person and the ease of visiting the shop. The higher the link efficiency is, the greater the ease of referral and visiting of a shop is indicated by the directed graph G.

Reciprocity is an index value indicating the number of bidirectional directed edges between two nodes in the directed graph G. When an individual visits a shop, the node of the individual and the node of the shop are connected by bidirectional directed edges. When two individuals refer each other to shops, the nodes of the two individuals are connected by bidirectional directed edges. When one individual refers another individual to a shop and the other individual visits the shop, the nodes of the two individuals are connected by bidirectional directed edges (see entry 917). The higher the reciprocity is, the greater the number of shop visits or the intimacy between the individuals is.

Homophily is an index value indicating the correlation between two nodes in the directed graph G. The higher the homophily is, the greater the correlation between nodes in the entire directed graph G is. If the two nodes are both shops, for example, then this indicates that in many cases the same individuals are visiting the shops. If the two nodes are both individuals, then this indicates that in many cases the same individuals have referred the shop. If the two nodes are an individual and a shop, this indicates that there are many cases in which referred individuals that were referred to the shop by the individual have visited the shop.

The cluster coefficient is an index value indicating the actual quantity of relationships in relation to the quantity of connectible relationships between nodes. The higher the cluster coefficient is, the denser the relationship between node groups in the directed graph G is. That is, the higher the cluster coefficient is, the greater the number of shops visited by the individual is, the greater the number of instances that the individual referred another person to the shop is, and the greater the number of cases that the referred individual has visited a shop referred to by the referrer is.

Thus, the first evaluation index value indicates the visit state by an individual to a shop, and indicates the interpersonal relationship involved in the individual referring another individual to the shop.

The second evaluation index includes centrality and similarity. Centrality is an index value indicating the importance of nodes and directed edges in the directed graph G. Specifically, for example, centrality includes degree centrality, betweenness centrality, and closeness centrality. Degree centrality includes out-degree centrality and in-degree centrality. Similarity is an index value indicating the similarity between two specific nodes in the directed graph G, for example, and is calculated by cosine similarity or Jaccard index.

The higher the out-degree centrality is, the greater the number of individuals who have visited a shop is if the node (source 902) is the shop, and the greater the number of visited shops or the greater the number of referred individuals who were referred to by an individual is if the node is the individual.

The higher the in-degree centrality is, the greater the number of individuals (including referrers and referred individuals) who have visited a shop is if the node (target 903) is the shop, and the greater the number of referrers who referred an individual to a shop is if the node is the individual.

The greater the betweenness centrality is, the greater the number of visited shops by the referrer and the referred individual is if the node is a shop, and the greater the number of shops visited, the number of individuals who were referred to the shop, and the number of individuals who referred the shop are if the node is an individual (including referrers and referred individuals).

The greater the closeness centrality is, the greater the number of visited shops by the referrer and the referred individual is if the node is a shop, and the greater the number of shops visited, the number of individuals who were referred to the shop, and the number of individuals who referred the shop are if the node is an individual (including referrers and referred individuals).

That is, the second evaluation index value is an index value that indicates the visit state by a referrer and a referred individual to a specific shop or indicates the number of times that an individual has referred another individual or the number of times that a referred individual has followed through on a referral.

The information processing device 110 calculates at least one of the above-mentioned evaluation index values. Which of the evaluation index values to adopt is set in advance, and can be changed by operation of the input device, which is an example of the user interface 114.

In step S804, the visit state of a referrer or a referred individual to a shop (relationship between shop and customer) is calculated by the first evaluation index value as the number of bidirectional directed edges connected between nodes of shops, or the total value of the total counts 1001 of the bidirectional directed edges. If, for example, a given shop is connected to five individuals (referrers and referred individuals) by bidirectional directed edges, then the number of bidirectional directed edges is five. If the numbers of shop visits by the five individuals (i.e., the total count 1001) are 1, 2, 3, 4, and 5, respectively, then the first evaluation index value indicating the shop visit state of that shop is 15.

The interpersonal relationship between the referrer and the referred individual is calculated by the first evaluation index value as the number of directed edges, the total value of the total counts 1001 of the directed edges, the graph distance, the reciprocity, or the homophily. If, for example, the total value of the total counts 1001 of the directed edges is the interpersonal relationship between the referrer and the referred individual, then if the referrer refers the referred individual to three shops, then the first evaluation index value indicating the interpersonal relationship between the referrer and the referred individual is 3. Regarding the relationship between shops, the shops are not directly connected by edges, and thus, the second evaluation index value is calculated as the graph distance or the similarity, for example.

If calculating the graph distance (graph diameter or graph radius) as the first evaluation index, then the information processing device 110 may perform the calculation with the weight of the directed edge as 1 (unweighted graph) without using the total count 1001. Also, the information processing device 110 may use the total count 1001 or a converted value thereof as the weight for the directed edge, and calculate the graph distance for the weighted directed graph G.

In the latter weighted directed graph G, the weight of the directed edge is interpreted as the distance, and thus, the weight of the directed edge and the total count 1001 (quantity of relationships) are in an inverse relationship. Thus, instead of using the total count 1001 as is, the inverse of the total count 1001 (where a numerical operation such as adding an integer of 1 or greater to the denominator to prevent the denominator from being 0 is performed) or a value obtained by subtracting the total count 1001 from a prescribed value is set as the weight of the directed edge.

### (Step S805)

The information processing device 110 uses the result output program 124 to execute an output process to output the calculation results from step S804 in a displayable manner. Specifically, for example, the information processing device 110 displays the calculation results in a display, which is one example of the user interface 114. Also, if the information processing device 110 receives the evaluation period via the network interface 115 by an operation on the terminal 140, the information processing device 110 transmits the calculation results to the terminal 140 via the network interface 115 and causes the same to be displayed in the terminal 140. In this manner, the series of processes are ended.

### <FIG. 15, Calculation Result Example 1>

FIG. 15 is a descriptive view showing a calculation result example 1. A calculation result 1500 is a calculation result example using the number of nodes and the number of edges of the directed graph G as the first evaluation index. Specifically, for example, the calculation result 1500 is a graph indicating the change over time in the number of nodes and the number of edges in the directed graph G. The horizontal axis of the graph indicates time and the vertical axis indicates the number of nodes and the number of edges.

Phase 1 to phase 4 on the horizontal axis indicate periods corresponding to the date/time 901. Phase 1 is a period from the start date/time of the evaluation period to the date/time 901 of "ta1." Phase 2 is a period from the date/time 901 of "ta1" to the date/time 901 of "tb1." Phase 3 is a period from the period up to the date/time 901 of "tb1" to the date/time 901 of "tb2." Phase 4 is a period from the date/time 901 of "tb2" to the date/time 901 of "tx" (end date/time of the evaluation period) (same applies below).

In the calculation result 1500, it can be observed that the number of edges (relationship between the shop and the customer, the relationship between customers or between the referrer and the referred individual) has increased more than the number of nodes (number of shops and number of individuals). In FIG. 15, the calculation result 1500 includes both the number of nodes and the number of edges, but may instead include either one of the number of nodes and the number of edges.

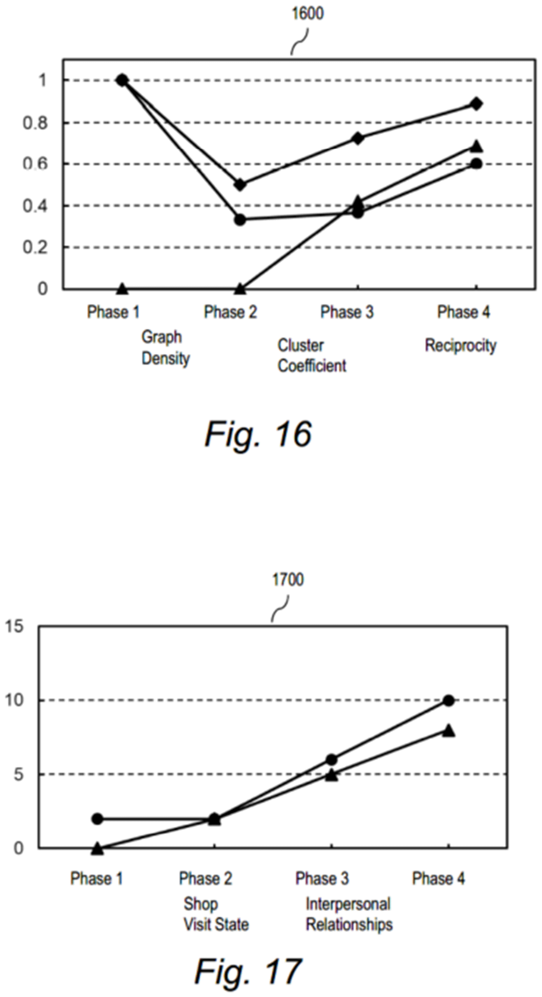

### <FIG. 16, Calculation Result Example 2>

FIG. 16 is a descriptive view showing a calculation result example 2. A calculation result 1600 is a calculation result example using the graph density, the cluster coefficient, and the reciprocity of the directed graph G as the first evaluation index. Specifically, for example, the calculation result 1600 is a graph indicating the change over time in the graph density, the cluster coefficient, the reciprocity of the directed graph G. The horizontal axis of the graph indicates time and the vertical axis indicates the graph density, the cluster coefficient, and the reciprocity.

Excluding the exceptional case of phase 1 in which there is only one shop and one individual, it can be observed that the graph density, the cluster coefficient, and the reciprocity increase from phase 2 to phase 4. In FIG. 16, the calculation result 1600 includes the graph density, the cluster coefficient, and the reciprocity, but may instead include at least one of the graph density, the cluster coefficient, and the reciprocity.

The calculation result 1500 of FIG. 15 and the calculation result 1600 of FIG. 16 both indicate a similar increase trend, but the maximum value of the calculation result 1600 of FIG. 16 indicates a proportion of 1, and thus, is useful for comparing shopping districts of different sizes, for example.

The calculation result 1500 of FIG. 15 and the calculation result 1600 of FIG. 16 are data calculated for the entire configuration of the directed graph G, and can be said to be data evaluating the relationship between the shop and the customer, the relationship between customers or between the referrer and the referred individual, and the relationship between shops in a comprehensive manner.

### <FIG. 17, Calculation Result Example 3>

FIG. 17 is a descriptive view showing a calculation result example 3. A calculation result 1700 is a calculation result example using the number of bidirectional directed edges of the directed graph G as the first evaluation index. Specifically, for example, the calculation result 1700 is a graph indicating the change over time in the number of bidirectional directed edges in the directed graph G. The horizontal axis of the graph indicates time, and the vertical axis indicates the number of bidirectional directed edges or the total of the total counts 1001 of such directed edges.

In the calculation result 1700, the shop visit state indicates the number of directed edges between the shops and the individuals, or the total of the total counts 1001 of such directed edges, and the interpersonal relationship indicates the number of directed edges between individuals or the total of the total counts 1001 of such directed edges. From phase 1 to phase 4, the shop visit state and the interpersonal relationships can both be observed to be increasing. In FIG. 17, the calculation result 1700 includes both the shop visit state and the interpersonal relationship, but may instead include either one of the shop visit state and the interpersonal relationship.

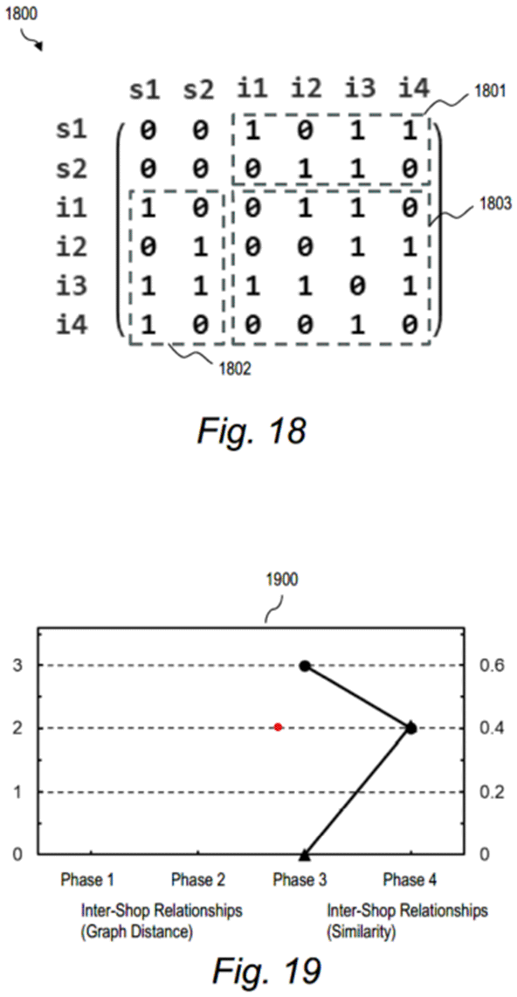

### <FIG. 18, Calculation Result Example 4>

FIG. 18 is a descriptive view showing a calculation result example 4. The calculation result 1800 is an adjacency matrix of the directed graph G(tx) of FIG. 14. If the value of a matrix entry ajk of the calculation result 1800 is "1," this indicates a directed edge e(j,k) from a source j to a target k, and if the value thereof is "0," this indicates no directed edge e(j,k). The shop visit state of the phase 4 in the calculation result 1700 is the sum of entries 1801 and 1802 surrounded by dotted lines in the calculation result 1800. The interpersonal relationship of the phase 4 in the calculation result 1700 is the sum of the entries 1803 surrounded by a dotted line in the calculation result 1800.

### <FIG. 19, Calculation Result Example 5>

FIG. 19 is a descriptive view showing a calculation result example 5. A calculation result 1900 is a calculation result example using graph distance and the similarity of two nodes as the second evaluation index. Specifically, for example, the calculation result 1900 is a graph indicating the change over time in the graph distance and the similarity between the shop s1 and the shop s2. The horizontal axis of the graph indicates time and the vertical axis indicates the graph distance and the similarity.

In phase 1 and phase 2, only the shop s1 exists, and thus, there is no data. From phase 3 to phase 4, the graph distance is reduced (the relationship between the shop s1 and the shop s2 is closer) and the similarity is increased (the relatedness of the shop s2, which emerged later, is catching up to the shop s1). In FIG. 19, the calculation result 1900 includes the graph distance and the similarity between the two nodes, but may instead include either one of the graph distance and the similarity.

In step S805, the calculation results 1500 to 1900 are outputted. In this manner, it is possible to visualize the relationship over time between the shop and the customer, the relationship over time between the customers or between the referrer and the referred individual, and the relationship over time between the shops on the basis of the evaluation index values withe the progression of the phases.

In this manner, according to the present embodiment, it is possible to visualize the relationship over time between the shop and the customer, the relationship over time between the individual and the referred individual, or the relationship over time between the shops. As a result, it is possible to ascertain the state of a shopping district and compare the state before and after revitalization, thereby evaluating the effect of measures.

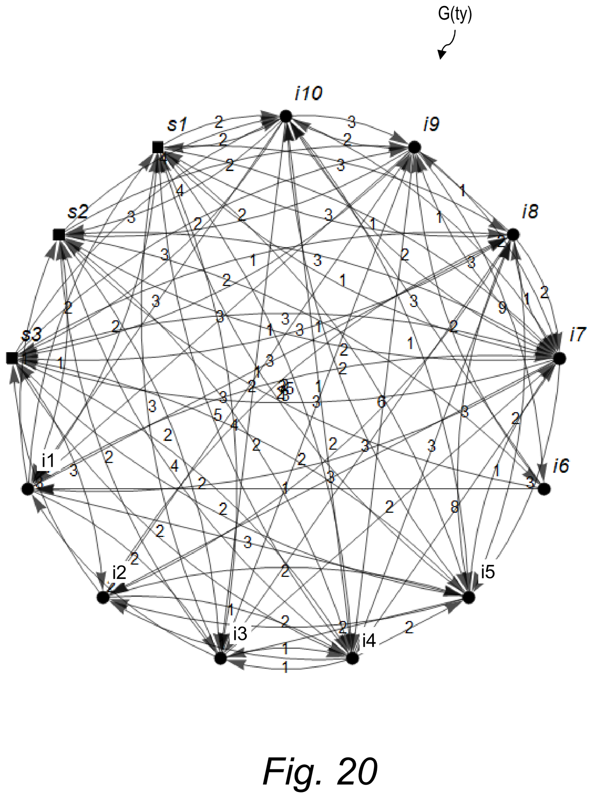

Specifically, for example, the revitalization state of the shopping district is visualized over time, and thus, if revitalization measures are implemented between phases, it is possible to evaluate the effect of the measures by comparing the state before and after the phases. That is, it is possible to quantitatively verify a shopping district regeneration model that conventionally has been limited to qualitative evaluation. In this example, for ease of explanation, a small scale example with two shops and four individuals has been used, but similar calculations and evaluation are possible even at a large scale. Below, a configuration will be described with reference to FIG. 20.

### <FIG. 20, Other Directed Graph Example>

FIG. 20 is a descriptive view showing an example of another directed graph. The directed graph G(ty) is a directed graph for a date/time ty constituted of shops s1 to s3 (three shops) and individuals i1 to i10 (ten individuals). The respective nodes are given a shop ID or a personal ID, and the individual directed edges are given a total count 1001 of the number of shop visits, the number of referrals, or the number of referred individuals. The directed graph G(ty) is outputted in step S208.

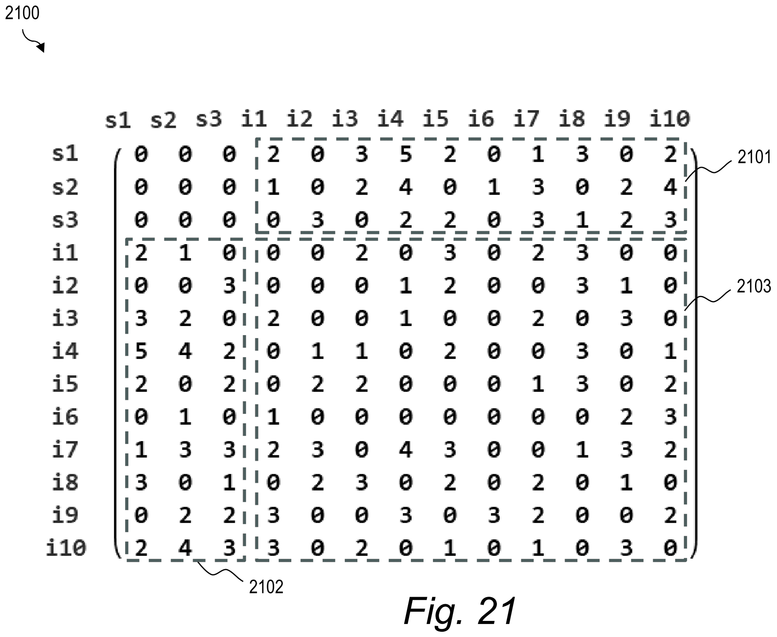

### <FIG. 21, Adjacency Matrix>

FIG. 21 is a descriptive view showing an adjacency matrix of the directed graph G(ty) of FIG. 20. In an adjacency matrix 2100, the matrix entry ajk indicates the total count 1001. The shop visit state of the individual is calculated as the sum of entries 2101 and 2102 (total counts 1001 of edges), and the value thereof is "102." The relationships between individuals are calculated as the sum of entries 2103 (total counts 1001 of edges), and the value thereof is "100." The adjacency matrix 2100 is outputted in step S208. By comparing such values across time or before and after revitalization measures, it is possible to contribute to the regeneration of the shopping district.

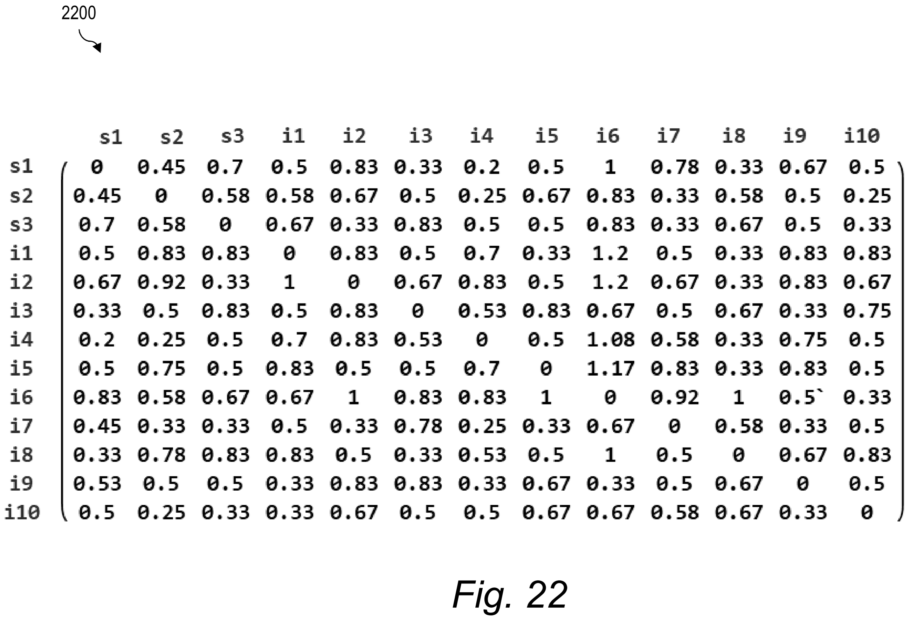

### <FIG. 22, Distance Matrix>

FIG. 22 is a descriptive view showing a distance matrix calculated on the basis of the adjacency matrix 2100 of FIG. 21. Here, the information processing device 110 calculates an inverse 1/ajk of the entry ajk (total count 1001) of the adjacency matrix 2100 as a weight on the directed edge e(j,k), thereby calculating the distance matrix 2200. An entry bjk of the distance matrix 2200 indicates the graph distance from a node j to a node k. Regarding the relationship between shops, the graph distance 0.45 between the shop s1 and the shop s2 is the smallest (closest relationship), the graph distance between the shop s2 and the shop s3 is 0.58, and the graph distance between the shop s1 and the shop s3 is 0.7. In one scenario, it is considered effective to enact a measure for cooperation between the shop s1 and the shop s3 in order to revitalize the shopping district, for example. The distance matrix 2200 is outputted in step S208.

In FIG. 22, it is possible to individually know the relationship between shop and individual and the relationship between individuals in addition to the relationship between shops. The relationship between shop and individual is a bidirectional directed edge, and thus, the entry bjk and the entry bkj are equal. In the relationship between individuals, the entry bjk and the entry bkj are not necessarily equal. For example, the entry b(i3)(i5) is 0.83 and the entry b(i5)(i3) is 0.5, and thus, the relationship from the individual i5 to the individual i3 is closer than the relationship from the individual i3 to the individual i5.

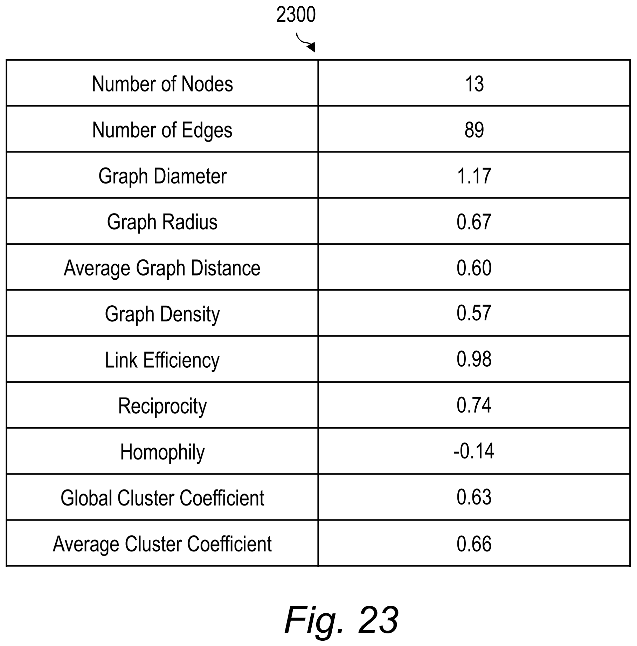

### <FIG. 23, Calculation Result Example 6>

FIG. 23 is a descriptive view showing a calculation result example 6. FIG. 23 shows a table 2300 that is the calculation result of the evaluation index value calculated on the basis of the adjacency matrix 2100 of FIG. 21. Similar to FIG. 22, the table 2300 is a calculation result of the evaluation index value for evaluating the entire configuration of the weighted directed graph G(ty) by setting the inverse of the entry ajk of the adjacency matrix 2100 as the weight of the directed edge e(j,k). The table 2300 is outputted in step S208.

Similar to the calculation result 1500 of FIG. 15 and the calculation result 1600 of FIG. 16, comparison over time of the values of the table 2300 up to when the date/time 901 reaches ty can play a role in considering revitalization measures.

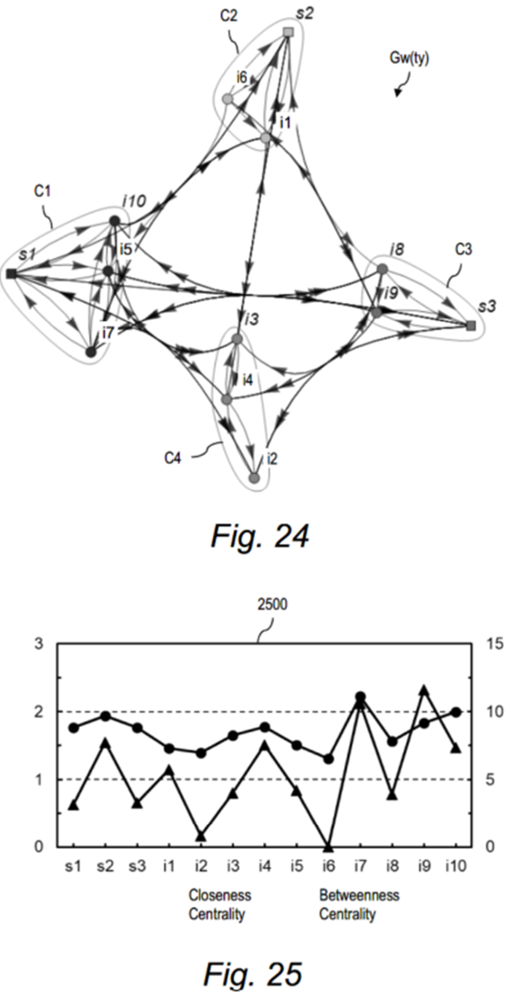

### <FIG. 24, Community Division>

FIG. 24 is a descriptive view showing a community division example. The information processing device 110 executes division on the weighted directed graph Gw(ty) for which the total count 1001 of the directed graph G(ty) of FIG. 20 was converted to the weight on the directed edge e(j,k), such that within the same community the nodes are connected by as many directed edges as possible at close distances (weight on directed edge e(j,k)), and between communities, the nodes are connected by few directed edges. The community division result is outputted in step S208.

It can be observed that the weighted directed graph Gw(ty) is divided into three communities C1 to C3 centered, respectively, on the shops s1, s2, and s3, and a community C4 constituted of the individuals i2, i3, and i4. In one scenario, it is considered effective to enact a measure for connecting the communities C1 to C4 in order to revitalize the shopping district, for example. Community division may be executed for each phase (date/time). As a result, a community division result for each phase (date/time) can be obtained.

### <FIG. 25, Calculation Result Example 7>

FIG. 25 is a descriptive view showing a calculation result example 7. FIG. 25 shows a calculation result 2500 for a centrality index value for shops and individuals. The calculation result 2500 is a graph in which the horizontal axis is the shops s1 to s3 and the individuals i1 to i10, and the vertical axis is the centrality index value. In the calculation result 2500, it can be observed that the closeness centrality of the individual i7 and the individual i10 is relatively high, and the betweenness centrality of the individual i7 and the individual i9 is high. With reference to FIG. 24 as well, it can be observed that the individual i7 and the individual i10 (and the community c1 including the foregoing as well as the shop s1 and the individual i5) take up important positions within the overall configuration, and that the individual i7 and the individual i9 are key people connecting the communities C1 and C3. The calculation result 2500 is outputted in step S208.

Thus, by displaying the weighted directed graph Gw(ty), which takes into consideration the total counts, that is shown in FIG. 24 and the calculation result 2500, it is possible to evaluate the relationship between shop and customer, the relationship between customers, the relationship between referrer and referred individual, and the relationship between shops, together with the evaluation index value. Also, by using the community division graph and the centrality index, it is easy to ascertain the state of a shopping district.

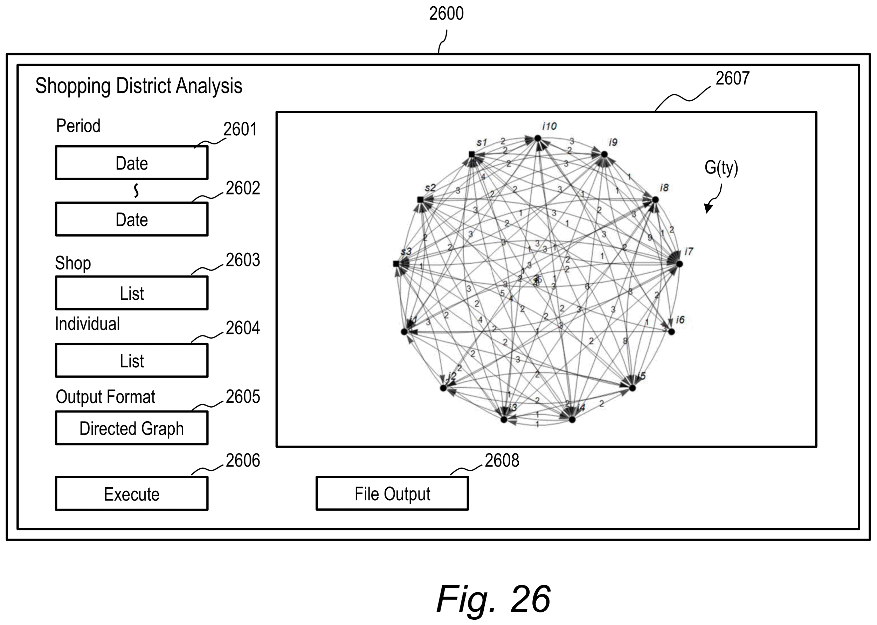

### <FIG. 26, Output Screen Example 1>

FIG. 26 is a descriptive drawing showing an output screen example 1. An output screen 2600 has a start date/time display section 2601, an end date/time display section 2602, a shop list setting section 2603, a person list setting section 2604, an output format selection section 2605, an execute button 2606, a calculation result display section 2607, and a file output button 2608.

The start date/time display section 1201 displays the start date/time for the evaluation period acquired in step S801. The end date/time display section 1202 displays the end date/time for the evaluation period acquired in step S801.

The shop list setting section 2603 is a user interface that displays a shop list to be evaluated through operation of the input device, and, through operation of the input device, receives input of a shop ID of the shop to be evaluated and adds the shop ID to the shop list.

The person list setting section 2604 is a user interface that displays a person list to be evaluated through operation of the input device, and, through operation of the input device, receives input of a personal ID of the individual to be evaluated and adds the personal ID to the person list.

The output format selection section 2605 is a user interface that receives selection of the output format for the calculation result to be displayed in the calculation result display section 2607. The output format can be selected from among the directed graph G shown in FIGs. 11 to 14 and 20, the adjacency matrix shown in FIGs. 18 and 21, the distance matrix shown in FIG. 22, and the community division graph shown in FIG. 24.

The execute button 2606 is a user interface that receives execution of steps S802 to S805 of FIG. 8 for evaluation periods and shops and individuals to be evaluated by operation of the input device.

The calculation result display section 2607 is a display region that displays the calculation result outputted in step S805 in the output format selected in the output format selection section 2605. The calculation result in the calculation result display section 2607 is displayed in step S208.

The file output button 2608 is a user interface that outputs, as a file, the calculation result outputted in step S805 through operation of the input device.

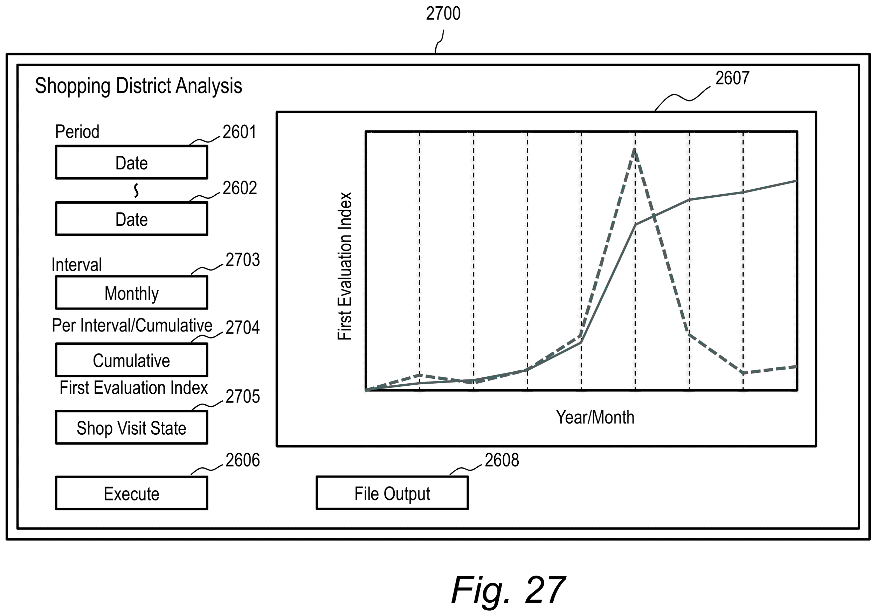

### <FIG. 27, Output Screen Example 2>

FIG. 27 is a descriptive drawing showing an output screen example 2. An output screen 2700 has the start date/time display section 2601, the end date/time display section 2602, an interval setting section 2703, a per interval/cumulative setting section 2704, a first evaluation index setting section 2705, the execute button 2606, the calculation result display section 2607, and the file output button 2608.

The interval setting section 2703 is a user interface that receives setting of the time interval for the evaluation period by operation of the input device.

The per interval/cumulative setting section 2704 is a user interface that receives a setting indicating whether the evaluation index value is to be calculated per interval or cumulatively in the time interval of the evaluation period set in the interval setting section 2703, by operation of the input device.

The first evaluation index setting section 2705 is a user interface that receives setting of the first evaluation index by operation of the input device. If displaying the calculation result 1500 shown in FIG. 15, the number of nodes and the number of edges of the directed graph G are set as the first evaluation index. If displaying the calculation result 1600 shown in FIG. 16, the graph density, the cluster coefficient, and the reciprocity of the directed graph G are set as the first evaluation index.

If displaying the calculation result 1700 shown in FIG. 17, the number of bidirectional directed edges of the directed graph G is set as the first evaluation index. If displaying the calculation result 1900 shown in FIG. 19, the graph distance and the similarity between two shops are set as the first evaluation index. In this case, in the first evaluation index setting section 2705, the information processing device 110 also receives setting of the shop IDs of the two shops to be evaluated.

By displaying the first evaluation index, the regeneration process for the shopping district can be evaluated over time.

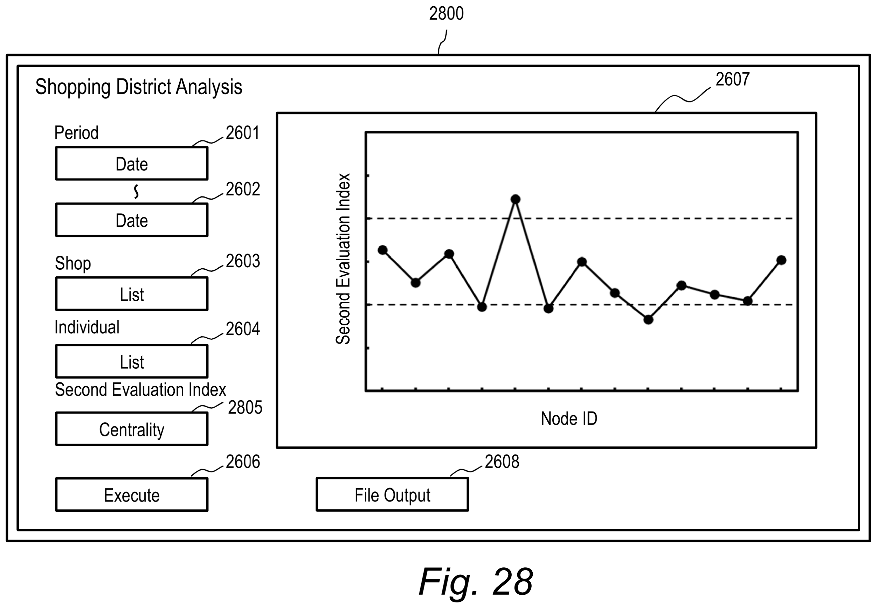

### <FIG. 28, Output Screen Example 3>

FIG. 28 is a descriptive drawing showing an output screen example 3. An output screen 2800 has the start date/time display section 2601, the end date/time display section 2602, the shop list setting section 2603, the person list setting section 2604, a second evaluation index setting section 2805, the execute button 2606, the calculation result display section 2607, and the file output button 2608.

The second evaluation index setting section 2805 is a user interface that receives setting of the second evaluation index by operation of the input device. If displaying the calculation result 2500 shown in FIG. 25, the closeness centrality and the betweenness centrality are set as the second evaluation index.

Thus, by displaying various calculation results, it is possible to evaluate revitalization measures for a shopping district and to verify regeneration models.

As described above, according to the present embodiment, the information processing device 110 can collect relation data regarding the relationship between shop and customer, the relationship between customer and referred individual, and the relationship between shops, and thus, by generating the directed graph G from the relation data to calculate the evaluation index values, the information processing device 110 can visualize the state of a shopping district, which is a collection of shops. As a result, an analyzer can evaluate the effect of revitalization measures for the shopping district.

It should be noted that this disclosure is not limited to the above-mentioned embodiments, and encompasses various modification examples and the equivalent configurations within the scope of the appended claims without departing from the gist of this disclosure. For example, the above-mentioned embodiments are described in detail for a better understanding of this disclosure, and this disclosure is not necessarily limited to what includes all the configurations that have been described. Further, a part of the configurations according to a given embodiment may be replaced by the configurations according to another embodiment. Further, the configurations according to another embodiment may be added to the configurations according to a given embodiment. Further, a part of the configurations according to each embodiment may be added to, deleted from, or replaced by another configuration.

Further, a part or entirety of the respective configurations, functions, processing modules, processing means, and the like that have been described may be implemented by hardware, for example, may be designed as an integrated circuit, or may be implemented by software by a processor interpreting and executing programs for implementing the respective functions.

The information on the programs, tables, files, and the like for implementing the respective functions can be stored in a storage device such as a memory, a hard disk drive, or a solid state drive (SSD) or a recording medium such as an IC card, an SD card, or a DVD.

Further, control lines and information lines that are assumed to be necessary for the sake of description are described, but not all the control lines and information lines that are necessary in terms of implementation are described. It may be considered that almost all the components are connected to one another in actuality.

### Description of Reference Characters

- 100: information processing system
- 110: information processing device
- 111: processor
- 112: storage
- 121: data acquisition program
- 122: network generation program
- 123: network analysis program
- 124: result output program
- 125: shop information DB
- 126: personal information DB
- 127: shop visit history DB
- 128: referral history DB
- 130: database
- 140: terminal
- G: directed graph

## Claims

1. An information processing device, comprising:
a processor configured to execute a program; and
a storage device configured to store the program,
wherein the storage device stores a directed graph constituted of a plurality of nodes indicating individuals and sites visitable by the individuals, a first directed edge indicating a first relation between the individual and the site among the plurality of nodes, and a second directed edge indicating a second relation between the individuals by connection of two of the nodes indicating two of the individuals among the plurality of nodes, and
wherein the processor executes:
calculation process of calculating an evaluation index value for evaluating the first relation and/or the second relation on the basis of the directed graph; and
an output process of outputting a calculation result obtained by the calculation process.

2. The information processing device according to claim 1,
wherein the first directed edge includes a number of visits indicating a number of instances that the individual has visited the site, and
wherein the second directed edge includes a number of referrals indicating a number of instances that one individual has referred the site to another individual, or includes a number of instances that said another individual to which the site was referred has visited the site.

3. The information processing device according to claim 1,
wherein the storage device stores a plurality of the directed graphs with differing dates/times,
wherein, in the calculation process, the processor calculates the evaluation index value for each of the plurality of directed graphs, and
wherein, in the output process, the processor outputs information indicating a change over time in the evaluation index value for each of the dates/times.

4. The information processing device according to claim 1,
wherein the evaluation index value is a first evaluation index value pertaining to a visit state by the individual to the site.

5. The information processing device according to claim 1,
wherein the evaluation index value is a first evaluation index value relating to an interpersonal relationship in which the individual has referred another individual to the site, or an interpersonal relationship in which said another individual to which the site was referred has visited the site.

6. The information processing device according to claim 1,
wherein the evaluation index value is a second evaluation index value pertaining to a visit state to a specific site.

7. The information processing device according to claim 1,
wherein the evaluation index value is a second evaluation index value relating to a number of referred individuals in which a specific individual has referred another individual to a site, or a number of instances in which said another individual, who is the referred individual, has visited the site.

8. The information processing device according to claim 1,
wherein the storage device stores a visit history database indicating which site was visited by the individual, and a referral history database indicating which site was referred by the individual to another individual, and
wherein the processor executes:
a generation process of generating the directed graph with reference to the visit history database and the referral history database, and storing the directed graph in the storage device.

9. The information processing device according to claim 8,
wherein, in the generation process, the processor refers to the visit history database to generate the directed graph by connecting a node indicating the individual to a node indicating the site visited by the individual by the first directed edge that is bidirectional.

10. The information processing device according to claim 8,
wherein, in the generation process, the processor refers to the referral history database to generate the directed graph by connecting a first node indicating the individual to a second node indicating another individual to which the aforementioned individual has referred the site by the second directed edge indicating a direction from the first node to the second node.

11. The information processing device according to claim 10,
wherein, in the generation process, the processor refers to the referral history database to generate the directed graph by connecting the second node to a third node indicating the site to which said another individual was referred and to which said another individual has visited, by the first directed edge that is bidirectional.

12. The information processing device according to claim 10,
wherein, in the generation process, the processor refers to the referral history database to generate the directed graph by connecting the first node to the second node by the second directed edge indicating a direction from the second node to the first node if said another individual to which the site was referred has visited the site.

13. The information processing device according to claim 3,
wherein the storage device stores a visit history database indicating which site was visited by the individual and when, and a referral history database indicating which site was referred by the individual to another individual and when, and
wherein the processor executes:
a generation process of generating a plurality of the directed graphs with different dates/times with reference to the visit history database and the referral history database, and storing the plurality of directed graphs in the storage device.

14. An information processing method executed by an information processing device that has a processor configured to execute a program, and a storage device configured to store the program,
wherein the storage device stores a directed graph constituted of a plurality of nodes indicating individuals and sites visitable by the individuals, a first directed edge indicating a first relation between the individual and the site among the plurality of nodes, and a second directed edge indicating a second relation between the individuals by connection of two of the nodes indicating two of the individuals among the plurality of nodes, and
wherein the processor executes:
calculation process of calculating an evaluation index value for evaluating the first relation and/or the second relation on the basis of the directed graph; and
an output process of outputting a calculation result obtained by the calculation process.

15. An information processing program that causes a processor to execute information processes,
wherein the processor can access a storage device that stores a directed graph constituted of a plurality of nodes indicating individuals and sites visitable by the individuals, a first directed edge indicating a first relation between the individual and the site among the plurality of nodes, and a second directed edge indicating a second relation between the individuals by connection of two of the nodes indicating two of the individuals among the plurality of nodes, and
wherein the processor is caused to execute:
calculation process of calculating an evaluation index value for evaluating the first relation and/or the second relation on the basis of the directed graph; and
an output process of outputting a calculation result obtained by the calculation process.
